# EUROPEAN PATENT SPECIFICATION

(11) **EP 1 193 968 B1**
(45) Date of publication and mention of the grant of the patent: **21.05.2008**
(21) Application number: 01122594.3
(22) Date of filing: 26.09.2001
(51) Int. Cl.: H04N 5/445

(54) **Television program guiding apparatus and method**
Vorrichtung und Verfahren zur Fernsehprogrammführung
Dispositif et procédé de guide de programmes de télévision

(30) Priority: 28.09.2000 JP 2000295601
(43) Date of publication of application: 03.04.2002
(73) Proprietor: Pioneer Corporation, Meguro-ku, Tokyo (JP)
(72) Inventor: Numata, Masahiro, Pioneer Corporation, Tokyo-to (JP); Inoue, Tatsu, Pioneer Corporation, Tokyo-to (JP); Watanabe, Kazuhiro, Pioneer Corporation, Tokyo-to (JP)
(74) Representative: Klingseisen, Franz

(56) References cited:
- EP-A- 0 924 927
- WO-A-00/40021
- WO-A-00/40028
- US-A- 5 353 121

## Description

### BACKGROUND OF THE INVENTION

### 1. Field of the Invention

The present invention relates to electronic program guides.

### 2. Description of Related Art

Digital broadcasting systems are operated in recent years, which transmit digitized television signals via satellites, such as broadcasting satellites and communication satellites, for reception by viewers so that they can watch television programs at home. A system of this type can provide so many channels that a multitude of programs can be aired.

Such a system transmits, from a satellite to a receiver at each viewer's home, information about an electronic program guide (EPG) indicative of contents of these many programs together with their video/audio data. At home, the user operates the receiver to display the EPG on a TV display. The user can search for programs, tune to programs to view/record them, and schedule programs for viewing/recording on the TV display. The user can also display a list of scheduled programs and their information, together with their associated icons over the relevant program cells in the EPG, whereby the user can check the programs scheduled for viewing/recording.

However, the EPG provides well over 100 programs, and all of them cannot be displayed within a program guide screen.

To search for a desired program over the EPG screens, the user must switch from one screen to another, which cost him/her much time and labor.

Further, the technique of locating a desired scheduled program through the list and icons is not user-friendly when the scheduled programs in the list are contending in the same time slot, in the sense that the user has difficulty visually recognizing such contention. For rescheduling, the user also encounters difficulty quickly identifying which programs are scheduled in the same time slot. These difficulties are expected to increase as the storage capacity of recording media grows larger.

Furthermore, documents WO-A-00/40028, WO-A-00/40021 and EP-A-0 924 927 each show a program apparatus forming the basis for the preamble of claim 1.

### SUMMARY OF THE INVENTION

The present invention has been made in view of these circumstances, and an object of the present invention is, therefore, to provide a program guiding apparatus and method which provide the user with user-specific EPG display screens, and which implement easy scheduling and rescheduling of programs for viewing/recording in a visually recognizable manner.

The above object of the present invention can be achieved by the following program guiding apparatus. The program guiding apparatus is provided with: a program adding device for adding desired program to tables; a program scheduling device for scheduling programs to be received based on the tables **;** and a display device for displaying information about said added programs and information about said scheduled programs while arranged in a single two-dimensional program guide screen at locations corresponding to respective time slots along a time axis, wherein
said display device configured to display break marks at the end of the interrupted program contending with another one with higher priority and/or at the beginning of the re-starting program after having been either interrupted or overlapped by a higher priority contending program, when multiple scheduled programs contend in the same time slot.

According to this aspect, the user can add favorite ones of programs broadcast by broadcast waves, and can also schedule programs to be received, for example, programs to be viewed/recorded. Further, these added and the scheduled programs are displayed while arranged in a single two-dimensional program guide screen at locations corresponding to their time slots along the time axis.

Therefore, the user can create a user-specific program guide screen in which only information about programs the user wish to view/record, or about programs the user has scheduled for viewing/recording are displayed. In addition, such a program guide screen displays the information about these programs while arranged at locations corresponding to their time slots along the time axis, whereby the user can check the information about the programs and their air times easily.

In one aspect of the program guiding apparatus of the present invention, said program scheduling device schedules programs selected from said programs added by said program adding device.

According to this aspect, the user can select programs for scheduling from the programs the user has added as his/her favorites, whereby time and labor to search for programs for scheduling can be curtailed.

In another aspect of the program guiding apparatus of the present invention, said two-dimensional program guide screen includes a first area for displaying said information about said added programs and a second area for displaying said information about said scheduled programs, said first and second areas being displayed while distinguished from each other.

According to this aspect, the user can check the information about the programs easily.

In further aspect of the program guiding apparatus of the present invention, each of said program adding device and said program scheduling device allows a plurality of programs to be added, said plurality of programs contending in whole or part of a time slot; and even if a plurality of said added programs or said scheduled programs contend in whole or part of said time slot, said display device displays information about each of said contending programs in said two-dimensional program guide screen.

According to this aspect, even if a plurality of favorite programs or scheduled programs contend in the same time slot, the user can recognize the contention of such programs easily.

In further aspect of the program guiding apparatus of the present invention, said two-dimensional program guide screen includes areas corresponding to entry types, and displays said information about said added programs in a corresponding one of said areas.

According to this aspect, program information can be displayed by entry type in the respective corresponding areas, whereby the user can check the program information and their air times more easily.

In further aspect of the program guiding apparatus of the present invention, said two-dimensional program guide screen includes areas corresponding to entry types, and displays said information about said added programs in a corresponding one of said areas. Each of said entry types is dedicated to a different user.

According to this aspect, a plurality of users each can create their own program guide screen.

In further aspect of the program guiding apparatus of the present invention, said information about said programs displayed while arranged in said two-dimensional program guide screen is moved in a visually recognizable *i*.*e*. a user observable manner to change said added programs to said scheduled programs and said scheduled programs to said added programs.

According to this aspect, program information is moved over the program guide screen in a visually recognizable manner to change an added program to a scheduled program, or vice versa, whereby the user can save his/her energy in adding and scheduling programs.

In further aspect of the program guiding apparatus of the present invention, if said information about said added programs contends with said information about said scheduled programs in whole or part of a time slot, said information about said added programs and said information about said scheduled programs, which are displayed while arranged in said two-dimensional program guide screen, are exchanged in a visually recognizable manner to change said added programs to said scheduled programs and said scheduled programs to said added programs.

According to this aspect, information about an added program and information about a scheduled program are exchanged over the program guide screen in a visually recognizable manner to change the added program to the schedule program, or vice versa, whereby the user can save his/her energy in adding and scheduling programs.

In further aspect of the program guiding apparatus of the present invention, if said information about said added programs contends with said information about said scheduled programs in whole or part of a time slot, said information about said added programs is combined with said information about said scheduled programs, both of which are displayed while arranged in said two-dimensional program guide screen, in a visually recognizable manner to change said added programs to said scheduled programs.

According to this aspect, information about an added program is combined with information about a scheduled program over the program guide screen in a visually recognizable manner to change the added program to the schedule program, whereby the user can save his/her energy in adding and scheduling programs.

In further aspect of the program guiding apparatus of the present invention, said programs are added via a two-dimensional program guide including a time axis and a channel axis for displaying a plurality items of program information.

According to this aspect, the user can check the information about the programs easily.

In further aspect of a program guiding method of the present invention, the program guiding method is provided with the processes of: adding desired program to tables; scheduling programs to be received based on the tables; and displaying information about said added programs and information about said scheduled programs while arranged in a single two-dimensional program guide screen at locations corresponding to respective time slots along a time axis; and displaying break marks at the end of the interrupted program contending with another one with higher priority and/or at the beginning of the re-starting program after having been either interrupted or overlapped by a higher priority contending program, when multiple scheduled programs contend in the same time slot.

According to this aspect, the user can create a user-specific program guide screen in which only information about programs the user wish to view/record, or about programs the user has scheduled for viewing/recording are displayed. In addition, such a program guide screen displays the information about these programs while arranged at locations corresponding to their time slots along the time axis, whereby the user can check the information about the programs and their air times easily.

### BRIEF DESCRIPTION OF THE DRAWINGS

FIG. 1 is a block diagram showing the configuration of a satellite digital broadcast receiver according to an embodiment of the present invention;
FIG. 2 shows an example of information included in a To-View/Record table;
FIG. 3 shows an example of information included in a Favorites table;
FIG. 4 is a diagram showing a data transmission method in digital broadcasting;
FIG. 5 shows an example of a screen displaying a Day EPG;
FIG. 6 shows an example of a screen displaying a Schedule EPG;
FIG. 7 shows another example of a screen displaying the Schedule EPG;
FIG. 8A to 8C show examples of how a program cell in a Favorites row is moved to a To-View/Record row;
FIG. 9A to 9C show other examples of how a program cell in the Favorites row is moved to the To-View/Record row;
FIG. 10 shows the appearance of a remote control used together with the receiver of FIG. 1;
FIG. 11 shows an example of a screen displaying a To-View/Record list;
FIG. 12 shows an example of a screen displaying a Favorites list;
FIG. 13 is a flowchart showing a process executed by a CPU while a program is viewed;
FIG. 14 is a flowchart showing a Day EPG displaying process;
FIG. 15 is a flowchart showing a Schedule EPG displaying process;
FIG. 16 is a flowchart showing a program scheduling process and a Favorites adding process while the Schedule EPG is displayed;
FIG. 17A and 17B are flowcharts showing the program scheduling process and the Favorites adding process, respectively;
FIG. 18 is a flowchart showing a program cell moving process while the Schedule EPG is displayed;
FIG. 19 is a flowchart showing a Favorites changing process;
FIG. 20 is a flowchart showing a scheduled program changing process;
FIG. 21A and 21B show how the contents of the To-View/Record table are changed when the program cell is moved as shown in FIG. 9A;
FIG. 22 shows an example of a screen displaying the To-View/Record list after the program cell is moved as shown in FIG. 9A;
FIG. 23 shows another example of a screen displaying the Schedule EPG; and
FIG. 24 shows still another example of a screen displaying the Schedule EPG.

### DETAILED DESCRIPTION OF THE PREFERRED EMBODIMENTS

The present invention will now be described with reference to a preferred embodiments shown in the drawings.

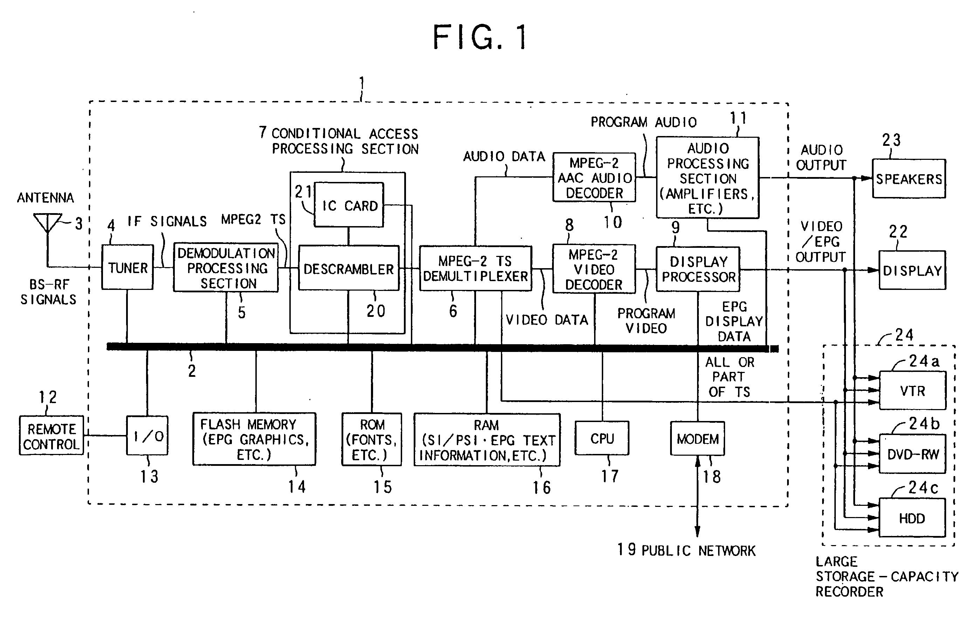

FIG. 1 shows the configuration of a satellite digital broadcast receiver according to an embodiment of the present invention. The satellite digital broadcast receiver 1 shown in FIG. 1, installed in the home of a viewer, receives digital broadcast signals (broadcast waves) from a satellite to display a television (TV) program on a home TV screen. At the same time, the receiver 1 receives information about an electronic program guide (EPG) sent from the satellite to display the information on the TV screen as instructed by the viewer.

As shown in FIG. 1, the receiver 1 has various components connected to a bus 2. The receiver 1 can also be operated by an attached remote control 12.

The broadcast waves (BS-RF signals) transmitted from the satellite are received by an antenna 3, and then sent to a tuner 4 within the receiver 1. The broadcast waves include TV video/audio information (hereinafter referred to as "TV program information"), and SI or "service information" used to display the EPG. The tuner 4 tunes to a user-selected band, and converts the received signal waves to intermediate frequency (IF) signals for application to a demodulation processing section 5. The section 5 demodulates the input digital signals, subjects the demodulated signals to data frame reformatting, error correction and other processes, and supplies the resulting signals to a demultiplexer 6 in an MPEG-2 transport stream (TS) format through a descrambler 20.

The demultiplexer 6 separates the audio and video data of a specified service from the input MPEG-2 TS format data for application to an audio decoder 10 and a video decoder 8, respectively. Here, the audio data is coded in an MPEG-2 AAC format and the video data in an MPEG-2 video format. The audio decoder 10 decodes the input audio data to generate program audio data for application to an audio processing section 11. The section 11, including amplifiers, performs predetermined audio signal processes to generate an audio output to audio speakers 23.

On the other hand, the video decoder 8 decodes the video data to generate program video data for application to a display processor 9. The processor 9 subjects the input program video data to predetermined processes to generate a video output to a display 22. The video processor 9 also superimposes textual information, etc. on program pictures displayed on the display 22. EPG display data to be described below is superimposed on or replaced with the program video data by the display processor 9, for output to the display 22.

Here, a large storage-capacity recorder 24 (e.g., a VTR 24a) receives audio signals from the audio processing section 11, video signals from the display processor 9, and all or part of the TS data from the demultiplexer 6 for recording into a recording medium.

The demultiplexer 6 further separates SI-containing data (data other than the TV program information) from the input MPEG-2 TS data. The SI provides the basis for the EPG display data, and is thus utilized for EPG display processes. The SI and other data separated by the demultiplexer 6 is stored in a RAM 16 under the control of a CPU 17. The RAM 16 also stores EPG text data for display of the EPG.

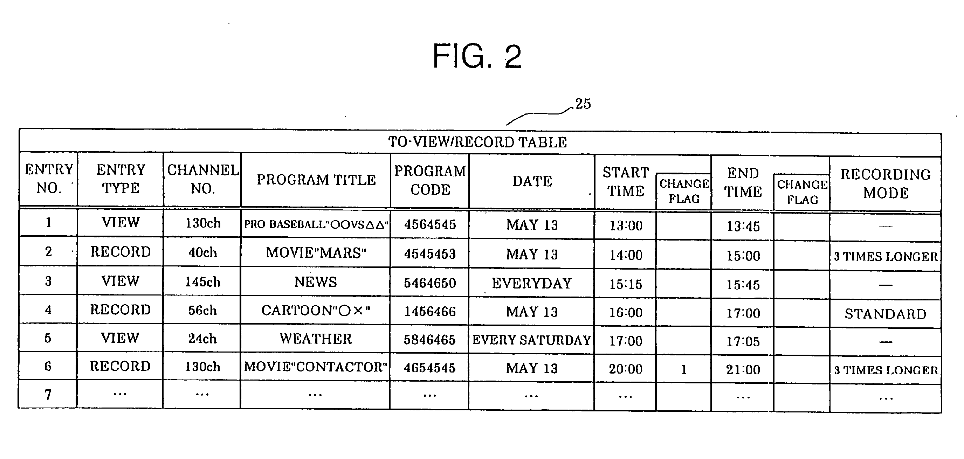

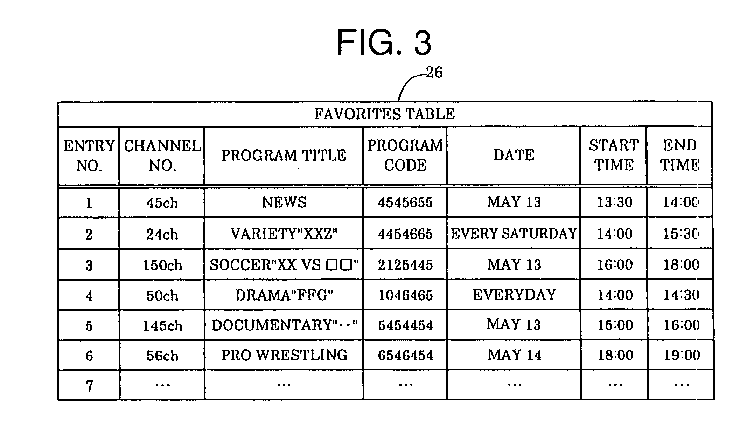

The RAM 16 further stores a To-View/Record table for management of information about scheduled programs and a Favorites table for management of information about favorite programs. The term "adding Favorites" means adding favorite and interesting programs to the Favorites table, independently of scheduling programs for viewing/recording. FIG. 2 shows an example of information to be managed by a To-View/Record table 25, and FIG. 3 shows an example of information to be managed by a Favorites table 26. Any program added to the table 25 as scheduled for viewing/recording, or any to-view/record program, is assigned an entry number as shown in FIG. 2, in which the numbers are assigned in order or air time. Alternatively, these numbers may be assigned in order or addition to the table 25. Further, any change flag indicated in the start time or end time area in the table 25 indicates that the start time or end time of the relevant program is changed. In the specific example of FIG. 2, the change flag in the start time of a movie "CONTACTOR" is set to "1", and this means that the originally scheduled viewing start time for that movie is changed. In the same example, the table 25 also manages the entry type, which is "view" or "record", as well as the recording mode for "record" entries, including a "3 times longer" mode and a "standard" mode.

Any program added to the Favorites table 26, or any favorite program, has an entry number assigned as shown in FIG. 3, in which the numbers are assigned in order to addition to the table 26. These entry numbers may alternatively be assigned in order of air time. The To-View/Record table 25 and the Favorites table 26 are referenced by the CPU 17, for example, when a Day EPG and a Schedule EPG, to be described below, are displayed on the display 22. A nonvolatile RAM is used as the RAM 16.

A flash memory 14 stores various graphic data (program grids, and predetermined symbols including channel logos) needed for EPG display, and a ROM 15 stores font data for use as EPG text.

A conditional access processing section 7 performs the following processes. Conditional access, which is available only to those who have made a subscription contract with a broadcasting business, provides information on a service or program basis, and the relevant encrypted MPEG-2 TS data is transmitted to the subscribers. The conditional access processing section 7 is comprised of a decryption processing section or descrambler 20, and an IC card 21 in which contract information is recorded. A service center jointly operated by the broadcasting businesses sends an IC card 21 to each subscribing user. The contract information recorded in each card 21, which includes subscription terms as to whether the user is permitted or prohibited to view programs, generally differs from one user to another. The subscription terms define subscribable channels and programs on a monthly or yearly basis, for example. If the user selects a conditional access program, the conditional access processing section 7, using both the terms of contract and the decryption-related information obtained from the broadcast waves, decrypts the MPEG-2 TS data, if the user is a subscriber to this service, so that the user can view that conditional access program. If the user is not a subscriber, however, the MPEG-2 TS data is not decrypted, so that the user cannot view that program. In the latter case, text informing that the user cannot view the program, which is stored in the ROM 15, etc., is displayed on an EPG display screen.

For pay-per-view programs, purchases are recorded in the IC card 21 every time the user purchases a program, and the user's pay-per-view program purchase information is periodically transmitted from the receiver 1 to a program distributor via a modem 18 and a public network 19.

Instructions input by the user with the remote control 12 is transferred to the CPU 17 via an interface 13. The CPU 17, recognizing the user's instructions, controls the components of the receiver 1 accordingly. For example, the CPU 17 directs the tuner 4 to tune to a user-designated channel.

To display EPG data, the CPU 17 prepares EPG text data by referencing the SI stored in the RAM 16, To-View/Record table 25, and Favorites table 26. The CPU 17 then prepares EPG display data, using the graphic data such as the EPG grid data stored in the flash memory 14, the font data in the ROM 15, and the EPG text data in the RAM 16, for application to the display processor 9. The processor 9, based on a switching instruction from the CPU 17, either switches the program video data from the video decoder 8 to the EPG display data, or superimposes the EPG display data upon the program video data, for output to the display 22 as the video signals.

Further, the public network 19 is connected to the bus 2 through the modem 18 to which a user's telephone or personal computer is connected, for necessary communication between broadcast stations and the user's home.

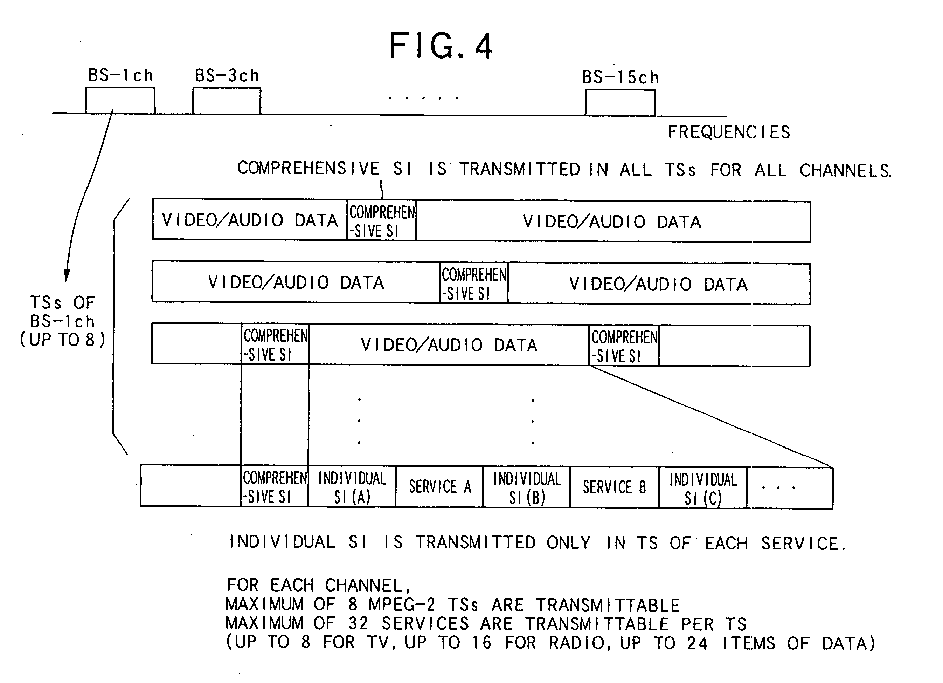

Next, digital signals transmitted from the satellite as original data for the EPG display data will be described. FIG. 4 schematically shows a digital signal data format. As shown in the figure, multiple BS channels (bands) are arranged in a satellite digital broadcasting system, enabling each BS channel to transmit up to eight MPEG-2 TSs and each TS to include up to thirty-two services. In the following description, the term "BS channel" is used to mean a frequency band in satellite broadcasting, as distinguished from a channel through which the receiver 1 receives broadcast programs.

Each TS includes comprehensive SI which is multiplexed with video/audio information. The term "comprehensive SI" means the SI of all broadcasting stations, including program schedule information of all their channels. That is, a single version of the comprehensive SI is transmitted while multiplexed in all TSs of all the BS channels. With this arrangement, no matter which channel the viewer is tuned to, the viewer can acquire the comprehensive SI included in any TS of that tuned channel to prepare EPG data for all the channels. Specifically, the CPU 17 shown in FIG. 1 controls the demultiplexer 6 to acquire the comprehensive SI from the currently received TS for preparation of the EPG text data based on the acquired SI.

FIG. 4 also shows, in its lower part, a video/audio data format for each TS. As mentioned above, each TS can transmit a maximum of 32 services, and these 32 services are time-division-multiplexed in the form of packets. In the example shown in FIG. 4, in the lowermost TS, services provided by multiple broadcast stations (services A, B, etc.) are time-division-multiplexed. To receive the service A, for example, the CPU 17 causes the tuner 4 of FIG. 1 to tune to a BS channel including a particular TS. Then, the demodulation processing section 5 of FIG. 1 specifies and extracts the particular TS from the plurality of TSs included in that BS channel, and further the demultiplexer 6 extracts the service A, which is time-division-multiplexed in the particular TS, by referencing its identifier.

Here, as shown in FIG. 4, individual station data (indicated by the services A, B, etc.) includes individual SI describing each service. In the example of FIG. 4, each individual SI precedes the service data for convenience sake. The individual SI is similar to the comprehensive SI, but is different in that the individual SI includes information unique to itself which is not included in the comprehensive SI. That is, the comprehensive SI includes information needed to display an EPG for all the channels, while the individual SI includes, for example, detailed information about each program. Thus, the CPU 17 of FIG. 1 acquires individual SI as instructed by the user to display the detailed information about a specific program.

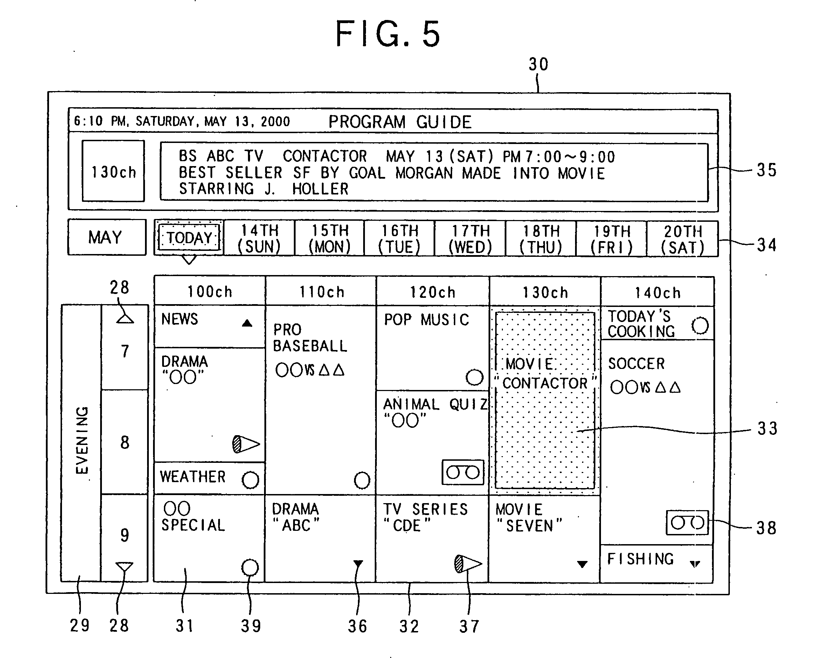

Next, EPG display screens will be described. FIG. 5 shows an example of a basic EPG display screen. This EPG display screen displays a program guide for multiple channels on a day-of-the-week basis, and will hereinafter be called as "Day EPG". The Day EPG 30 is displayed by pressing an "EPG key" 91 (described below) on the remote control 12.

The Day EPG 30 displays current date/time information in its uppermost area. The Day EPG 30 includes program guides for eight days from the current day to the same day of the next week as shown in the FIG. 5. The Day EPG 30 provides a program guide embracing all the channels for each day. When the user specifies a desired day with a Day tab 34, a program guide for that day appears on the screen. Every time the user presses a "Day Change key" 92 (described below) on the remote control 12, a program guide for the next day appears. Once the program guide for the seventh day has been displayed, the user is returned to the program guide for the current day.

The program guide is displayed in a program grid 32, in which program cells 31 are arranged. A time slot area 29 is arranged as a column to the left of the program grid 32. In the example of FIG. 5, a program guide is displayed which lists programs from 7 to 10 in evening time slots on Saturday, May 13. Each cell 31 includes the title, outline, and other information about a program to be aired in the relevant time slot displayed in the time slot area 29. Channels are listed in a row above the program grid 32.

Some program cells 31 include a continuation mark 36, indicating that the marked program, which is long, extends in the direction of time axis pointed by the mark beyond the program grid 32. A scroll mark 28 allows the user to scroll through the screen in the pointed directions. In some other cells 31, displayed are View icons 37, Record icons 38, and Favorites icons 39. The View icon 37 indicates that the program is planned for viewing. The Record icon 38 indicates that the program is planned for recording. The Favorites icon 39 indicates that the program is added as a Favorites entry. In one embodiment, the to-view/record programs and favorite programs may be distinguished from one another by coloring their cells 31 differently.

The program highlighted by a cursor 33 is the program currently selected by the user. An outline of the currently selected program is displayed in an outline area 35 in the upper part of FIG. 5. The outline is generated based on comprehensive SI included in each of the above-mentioned TSs.

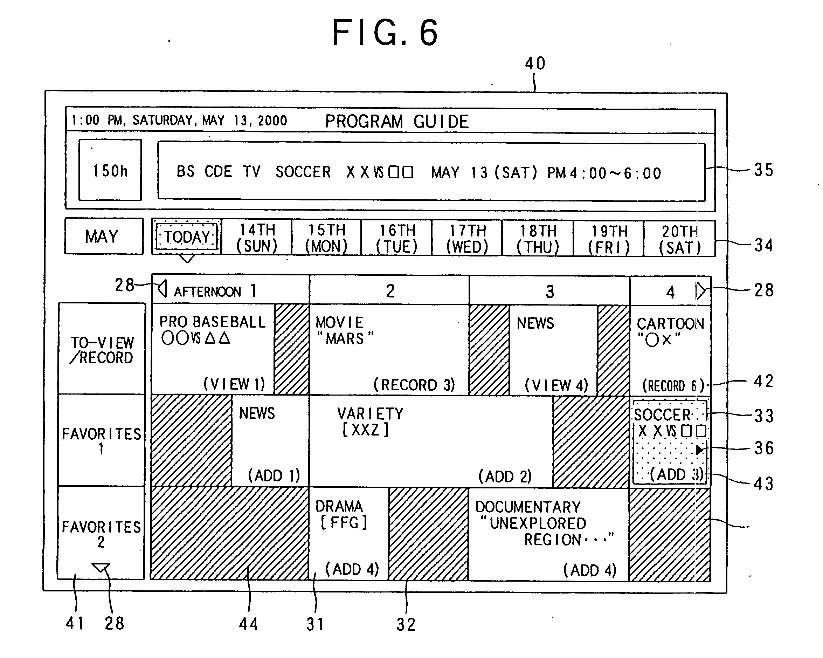

FIG. 6 shows an example of a screen displaying a Schedule EPG, which is a key feature of the present invention. The Schedule EPG 40 is displayed upon pressing a "Schedule key" 93 (described below). The Schedule EPG 40 includes a row of time axis above the program grid 32, displaying, in this example, afternoon time slots from 1 to 4:30 on Saturday, May 13. The time slots are scrollable using the scroll marks 28 in the directions pointed by their arrows. The Schedule EPG 40 also includes an entry type area 41 to the left of the program grid 32 to identify programs listed in the grid 32 by entry type.

In this example, the entry type area 41 is labeled by "To-View/Record", "Favorites 1", and "Favorites 2", each of which is followed by a row of corresponding program cells 31 to its right. For example, in the To-View/Record row, the cells 31 of programs scheduled for viewing/recording are displayed while arranged at locations corresponding to their time slots, respectively. These scheduled program cells 31 are arranged based on the To-View/Record table 25.

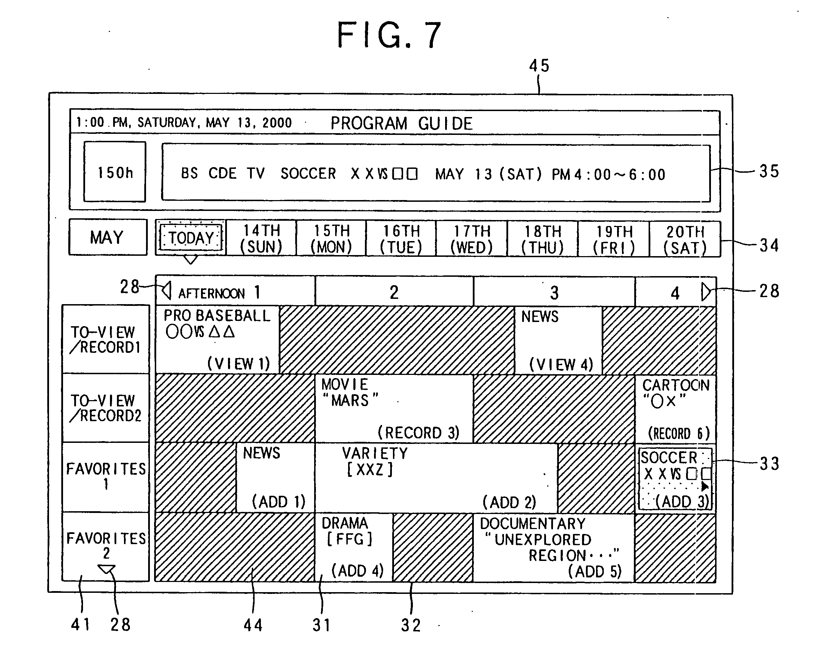

Information displayed in each scheduled program cell 31 includes the entry type and entry number (corresponding to the entry number stored in the To-View/Record table 25) of the relevant program, in addition to its title, outline, etc. For example, "View 6" denoted by reference numeral 42 in FIG. 6 indicates that the program is scheduled for viewing, and its entry number is "6". Although there is only one To-View/Record row in the example of FIG. 6, there may be two or more rows if a to-view program and a to-record program contend in the same time slot. For example, two rows may be reserved, one for to-view programs and the other for to-record programs, as in a Schedule EPG 45 shown in FIG. 7.

Further, as shown in FIG. 6, in the two rows of Favorites 1 and 2, the cells 31 of favorite programs are displayed while arranged at locations corresponding to their time slots, respectively. These cells 31 are arranged based on the Favorites table 26. Information displayed in each favorite program cell 31 includes the entry type and entry number (corresponding to the entry number stored in the Favorites table 26) of the relevant program, in addition to its title, outline, etc. For example, "Add 3" denoted by reference numeral 43 in FIG. 6 indicates that the entry number of the favorite program is "3".

There are two rows of favorite programs in the example of FIG. 6. This means that at least two of the programs listed as favorites contend in the same time slot. For example, for a variety "XXZ" and a drama "FFG" scheduled to be broadcast in the same time slot, two rows are reserved to allow the user to check their air times through their cells 31 which are located in the different rows. Thus, the number of rows increases with increasing number of programs contending in the same time slot. If there are three or more Favorites rows, the scroll mark 28 appears in the entry type area 41 as shown in FIG. 6, allowing the user to scroll down to see the third and subsequent rows. Three or more rows may, of course, be displayed within a single screen. How favorite program cells 31 are distributed to multiple Favorites rows is left to user's discretion. For example, the program cells 31 may be displayed in order of addition or air time. Further, a minimum number of rows (e.g., three rows) may be reserved regardless of whether or not there are programs to be displayed. Any change in the number of rows may be reflected in the Schedule EPG 40 immediately or when the Schedule EPG 40 is displayed next time.

Further, shaded regions (one denoted by reference numeral 44) in FIG. 6 are slots where no scheduled and favorite program cells 31 are inserted. Likewise in the Day EPG 30, in the Schedule EPG 40, the currently selected program is displayed in the cell 31 over which the cursor 33 is placed, and the outline of that program is displayed in the outline area 35.

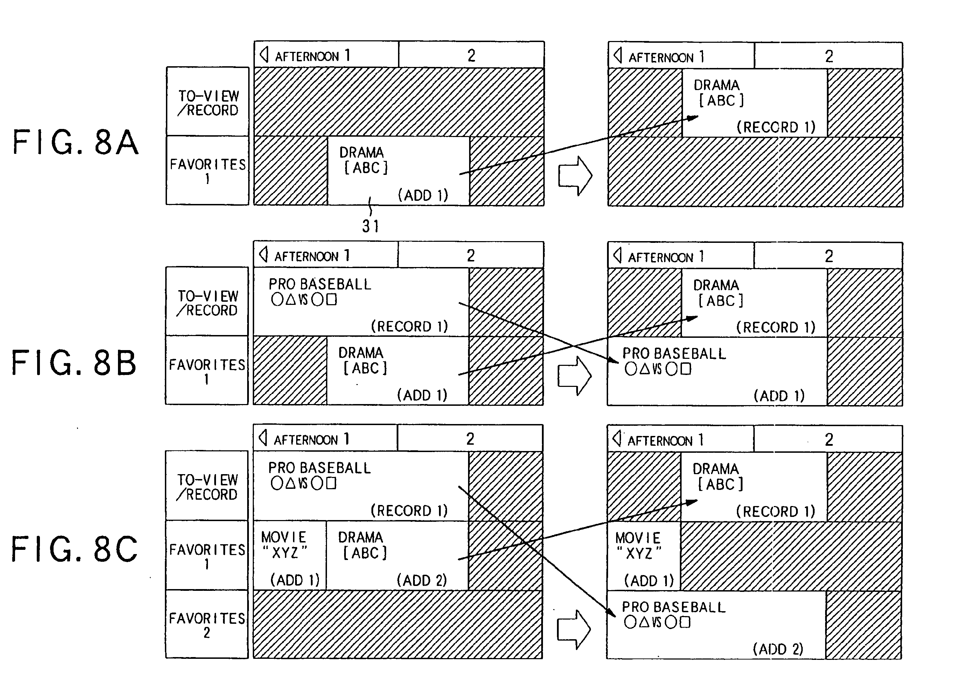

Further, the Schedule EPG 40 allows the user to move from a To-View/Record row to a Favorites row and vice versa by operating the remote control 12. FIG. 8A through 9C show several examples in which a program cell 31 in a Favorites row is moved to the To-View/Record row. FIG. 8A through 9C show the program grid 32 and the entry type area 41 of the Schedule EPG only in part for purposes of explanation.

In the example of FIG. 8A, the program cell 31 of the drama "ABC" to be aired in a time slot from 1:30 to 2:30 p.m. listed in the Favorites 1 row is moved to the To-View/Record row in the same time slot. In this example, the cell 31 of the drama "ABC" is moved to have its entry type changed from Favorites to To-View/Record. That is, the drama "ABC" is deleted from the Favorites table 26, and in turn, newly stored in the To-View/Record table 25 as a program scheduled for recording. Further, the entry numbers in the tables 26 and 25 are reassigned according to any of the above-mentioned rules.

In the example of FIG. 8B, the program cell 31 of the drama "ABC" in the Favorites 1 row is exchanged with the program cell 31 of a pro baseball "○ΔVS○□" in the To-View/Record row. That is, in this example, the drama "ABC" and the pro baseball "○ΔVS○□" contend in the same time slot, and thus their program cells 31 are exchanged, instead of simply having the cell 31 of the drama "ABC" moved to the To-View/Record row. As a result of this exchange, the drama "ABC" has its entry type changed from Favorites to To-View/Record, while the pro baseball "○ΔVS○□" from To-View/Record to Favorites. As described with reference to FIG. 8A, the To-View/Record table 25 and the Favorites table 26 are similarly updated with their entry numbers reassigned after the exchange.

As shown in FIG. 8C, for example, if the cell 31 of the pro baseball "○ΔVS○□" finds that the corresponding time slot in its destination row, which is Favorites 1, is already occupied by another program (a movie "XYZ"), then its destination is diverted to, for example, the Favorites 2 row. In one embodiment, the cell 31 of the pro baseball "○ ○ ΔVS○□" may be deleted, instead of being moved to the Favorites row in the examples of FIG. 8B and 8C.

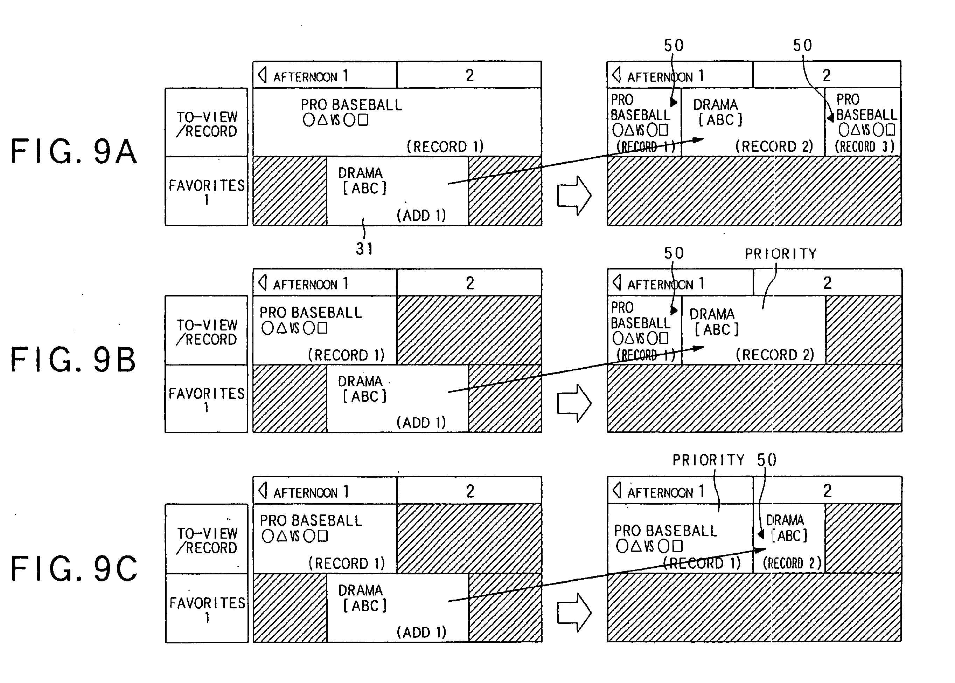

In the example of FIG. 9A, the program cell 31 of the drama "ABC" in the Favorites 1 row is moved to be combined with the program cell 31 of the pro baseball "○ΔVS○□" in the To-View/Record row. In this example, the cells 31 are not exchanged as in FIG. 8B, but the cell 31 of the drama "ABC", given priority, is squeezed into the cell 31 of the pro baseball "○ΔVS○□" that is resident in the destination row. The resulting rescheduling is that the pro baseball "○ΔVS○□" will be recorded from 1 to 1:30 p.m., the drama "ABC" will be recorded from 1:30 to 2:30 p.m., and the pro baseball "○ΔVS○□" will be recorded from 2:30 to 3 p.m. Further, after the rescheduling, a pair of break marks 50, such as shown in FIG. 9A, appears based on the change flag in the Favorites table 26. That is, the change flag in the table 26 corresponds to the pair of break marks 50. The pair of break marks informs the user that the pro baseball "○ΔVS○□" is continuously aired even during the time slot in which the drama "ABC" is planned to be recorded. In one embodiment, it may be configured for the example of FIG. 9A such that the plan for recording the pro baseball "○ΔVS○□ " from 2:30 to 3 p.m. is cancelled.

In the example of FIG. 9B, the cell 31 of the drama "ABC" in the Favorites 1 row is moved to be combined with the cell 31 of the pro baseball "○ΔVS○□" in the To-View/Record row, which operation is substantially similar to that in the example of FIG. 9A. The example of FIG. 9B is, however, different from that of FIG. 9A in that air time contention as considered from the drama "ABC" occurs in part in the former and in whole in the latter. In the example of FIG. 9B, the cell 31 of the program to be moved is given priority for recording, similarly to the example of FIG. 9A.

In the example of FIG. 9C, the cell 31 of the drama "ABC" in the Favorites 1 row is also moved to be combined with the cell 31 of the pro baseball "○ΔVS○□" in the To-View/Record row. This example is different from the example of FIG. 9B in that the pro baseball "○ΔVS○ □" resident in the To-View/Record row is given priority. That is, in the example of FIG. 9C, the recording time remains unchanged for the pro baseball "○ΔVS○□" that is resident in the To-View/Record row, but is changed for the drama "ABC" that is moved to that row. The break mark 50 is similarly displayed in FIG. 9B and 9C.

While the examples in which the program cell 31 arranged in the Favorites row is moved to the To-View/Record row have been described in FIG. 8A through 9C, moves may be made from the To-View/Record row to one of the Favorites rows, as well as from one to the other of the Favorites rows.

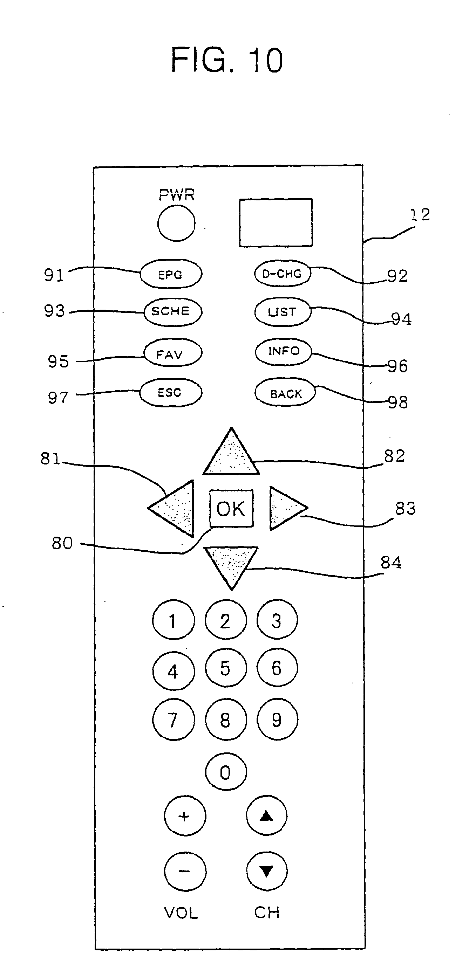

FIG. 10 shows the appearance of the remote control 12 used together with the receiver 1 of the present invention. Of the function keys provided on the upper part of the remote control 12, the "EPG key" 91 is used to display a regular Day EPG screen. When pressing the EPG key 91 while watching a program, the user can switch the display 22 screen from the program to the Day EPG screen, such as shown in FIG. 5. To return to the program from the Day EPG, the key 91 is pressed again. The "Day Change key" 92 to the right of the EPG key 91 is used to change the day of the week in the displayed program guide. The "Schedule key" 93 below the EPG key 91 allows the user watching a program to switch to the Schedule EPG screen, such as shown in FIG. 6, for example, when pressed. To return to the program from the Schedule EPG, the Schedule key 93 is pressed again.

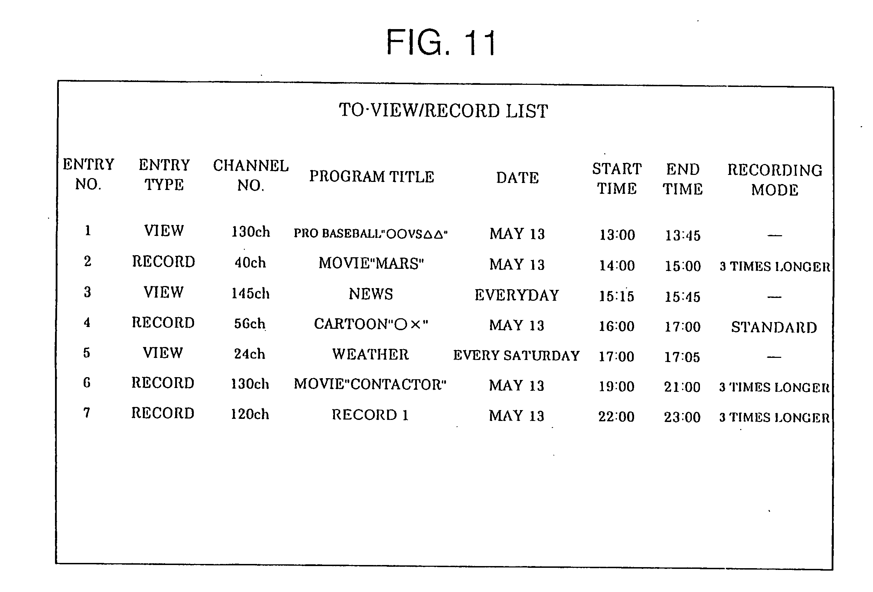

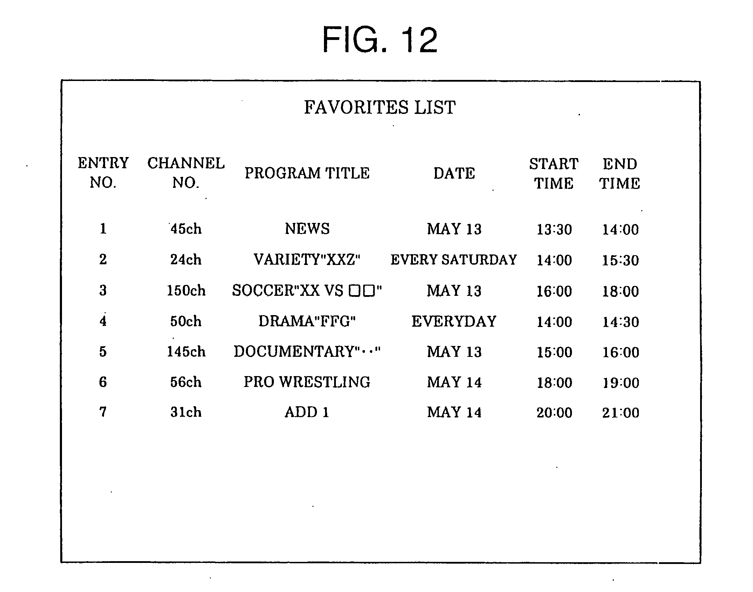

A "List key" 94 to the right of the Schedule key 93 allows the user viewing a program to switch to a To-View/Record List screen, such as shown in FIG. 11, when pressed. The To-View/Record List screen displays information about scheduled programs managed by the To-View/Record table 25, in order to entry number. When the List key 94 is pressed again, the To-View/Record List screen is switched to a Favorites List screen, such as shown in FIG. 12. When the List key 94 is pressed once again, the user is returned to the program from the Favorites List screen. The Favorites List screen displays information about favorite programs managed by the Favorites table 26, in order of entry number. The user can make, change, or cancel any schedule for viewing or recording a program over the To-View/Record List screen by operating various keys on the remote control 12. Changing a schedule means changing the viewing/recording start time, for example. The user can similarly add, change, or delete any favorite programs over the Favorites List screen.

Further, "Record 1" displayed in the To-View/Record List screen of FIG. 11 indicates that the program is not selected via the Day EPG screen, etc., but selected via date/time and channel designation. The information about the thus scheduled program may be added to the To-View/Record table 25. Likewise, "Add 1" displayed in the Favorites List screen of FIG. 12 indicates that the program is not selected via the Day EPG screen, etc., but selected via only date/time and channel designation. The information about the thus selected program may be added to the Favorites table 26.

A "Favorites key" 95, which is below the Schedule key 93, allows the user, who has selected a program with the cursor 33 over the Day EPG screen, to add the program to the Favorites table 26, when pressed.

An "Information key" 96 to the right of the Favorites key 95 allows the user, who has selected a program with the cursor 33 over the Day or Schedule EPG screen, to display a Detailed Information screen for the program, when pressed. The Detailed Information screen (not shown) displays an in-depth description of the selected program, including, for example, details of the program (e.g., a synopsis of the program), information about whether the program is a conditional access program or not, information about the fact that the user cannot view the program due to the terms of contract, etc., together with the information displayed in the outline area 35 in the upper part of each EPG screen. The detailed program information is generated based on the corresponding individual SI in each of the above-mentioned TSs. The Detailed Information screen is associated with each of all the program cells 31 listed in each EPG on a one-to-one basis.

An "ESC key" 97, which is below the Favorites key 95 is pressed to return to the program screen from an EPG screen. A "BACK key" 98 to the right of the ESC key 97 is used to undo the last action.

Cursor Movement keys 81 to 84 are arranged substantially in the middle of the remote control 12, for moving the cursor 33 over each EPG screen. For example, when the user viewing an EPG screen presses the left arrow key 81, the cursor 33 is moved leftward one program cell, while when the user presses the right arrow key 83, the cursor 33 is moved rightward one program cell. Further, when the up arrow key 82 is pressed, the cursor 33 is moved up, while when the down arrow key 84 is pressed, the cursor 33 is moved down.

When the user places the cursor 33 over a program using the Cursor Movement keys 81 to 84, that program is selected, but the selection is not yet confirmed by the receiver 1 for subsequent processing. To confirm the selection of the program after placing the cursor 33 over the program, the user must press an "OK key" 80. For example, when the user places the cursor 33 over the currently broadcast program cell 31 by operating the relevant keys 81 to 84 and then presses the OK key 80, the receiver 1 tunes to the channel broadcasting the program in question for output of the picture and sound of the program to the display 22 and the audio speakers 23. When the OK key 80 is pressed again, a Record screen appears together with the picture of the program. By following instructions given on the Record screen, the user can record the program. This is how the user can view and/or record the program.

Further, when the user places the cursor 33 over the cell 31 of a program to be aired at a future time using the Cursor Movement keys 81 to 84 and then presses the OK key 80, a Schedule screen appears for that program. By following instructions given on the Schedule screen, the user can schedule that program for viewing/recording. The programs scheduled for viewing/recording are stored in the To-View/Record table 25.

Still further, the Cursor Movement keys 81 to 84 and the OK key 80 are used to move the program cells 31 over the Schedule EPG 40 screen as described with reference to FIG. 8A through 9C. For example, in FIG. 8A, the cursor 33 is first placed over the cell 31 of the drama "ABC" in the Favorites 1 row using the Cursor Movement keys 81 to 84, and the OK key 80 is then pressed to move the cell 31 to the To-View/Record row.

It should be noted that the other keys on the remote control 12 will not be described because they are used to receive ordinary TV programs and the like, and hence have no direct bearing on the present invention.

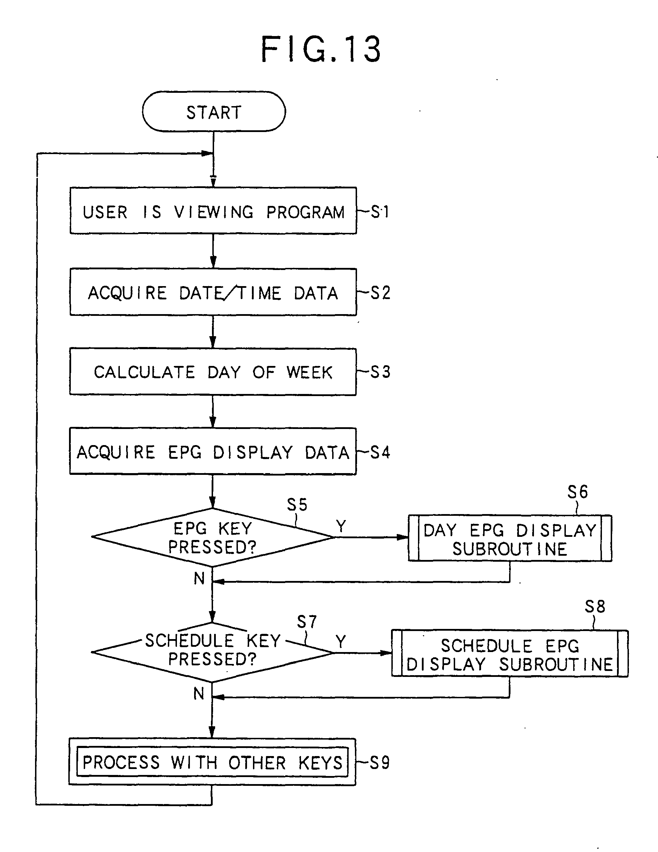

Next, the operation of the satellite digital broadcast receiver 1 according to the disclosed embodiment will be described with reference to the flowcharts shown in FIG. 13 through 20. It should be understood that the following processes are performed mainly by the CPU 17 of FIG. 1 that executes predetermined processing programs while controlling the RAM 16, the display processor 9, and other related components.

FIG. 13 shows a main routine executed by the CPU 17 while the user is viewing a program. Let it be supposed that the user is receiving a desired channel by controlling the receiver 1 to view the program (step S1). First, the CPU 17 extracts the comprehensive SI from a TS of the tuned channel to acquire the date/time data included therein (step S2). In this system, the date/time data is managed by the broadcasting station transmitting the broadcast waves, and the current date/time data is included in the comprehensive SI. Thus, the CPU 17 acquires the date/time data from the transmitted waves. Then, the CPU 17 calculates the day of the week of "Today" or the current day from the acquired date/time data (step S3). Since day-of-the-week information is not usually included in the date/time data from the satellite, the CPU 17 specifies the day from the date/time data through a predetermined calendar-based computation. Then, EPG display data for 8 days from the current day is acquired as day cell data for the Day EPG based on the thus specified date/time and day data (step S4).

Next, when the user presses the EPG key 91, the CPU 17 detects this (step S5) to start a Day EPG displaying subroutine (step S6). When the user presses the Schedule key 93, the CPU 17 detects this (step S7) to start a Schedule EPG displaying subroutine (step S8).

In step S9, the CPU 17 executes processes as instructed by any key other than the EPG key 91 and the Schedule key 93 on the remote control 12. For example, when the List key 94 is pressed, the To-View/Record list such as shown in FIG. 11 is displayed on the screen.

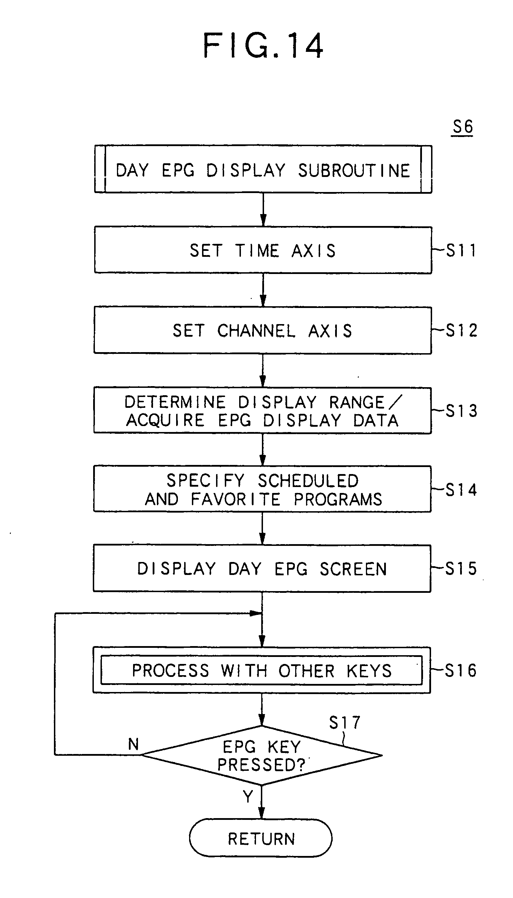

FIG. 14 shows the Day EPG displaying subroutine executed in step S6 of FIG. 13. First, in this subroutine, the CPU 17 sets the day of a Day EPG for display to the current day, whereby "Today" is selected on the Day tab 34. Then, the CPU 17 sets the time axis of the Day EPG for display (step S11), by arranging the time slot area 29 such that the area 29 starts with a unit time including the current time.

Next, the CPU 17 sets the channel axis of the Day EPG for display (step S12); i.e., the channel axis displayed when the user pressed the EPG key 91 is maintained. Then, the CPU 17 determines the size of the program grid 32 and acquires EPG display data fit for the determined display range, from the SI (step S13). For example, if a program grid as large as m hours and n channels can be arranged by a receiver setting, then the CPU 17 determines the size as large as m hours from the starting time set in step S11 and n channels from the starting channel set in step S12, and acquires the EPG display data fit for the determined display range. Next, the CPU 17 references the To-View/Record table 25 and the Favorites table 26 to specify scheduled and favorite programs from among programs listed in the program grid determined in step S13 (step S14).

Using the thus obtained EPG display data, the CPU 17 and the display processor 9 configure the program guide to display the Day EPG on the display 22, and at the same time, display the View/Record icons 37 and 38, and the Favorites icons 39 within the program cells according to the entry type specified in step S14 (step S15). This is how the Day EPG 30 such as shown in FIG. 5 is displayed. When the user presses the EPG key 91 again, with the Day EPG 30 thus displayed, the CPU 17 detects this (step S17) to return to the main routine of FIG. 13, whereby the user is allowed to view the program. On the other hand, in step S16 of FIG. 14, the CPU 17 executes processes corresponding to various key operations performed over the remote control 12. For example, when the Information key 96 is pressed with the Day EPG 30 displayed, the Detailed Information screen for the program selected by the cursor 33 is displayed.

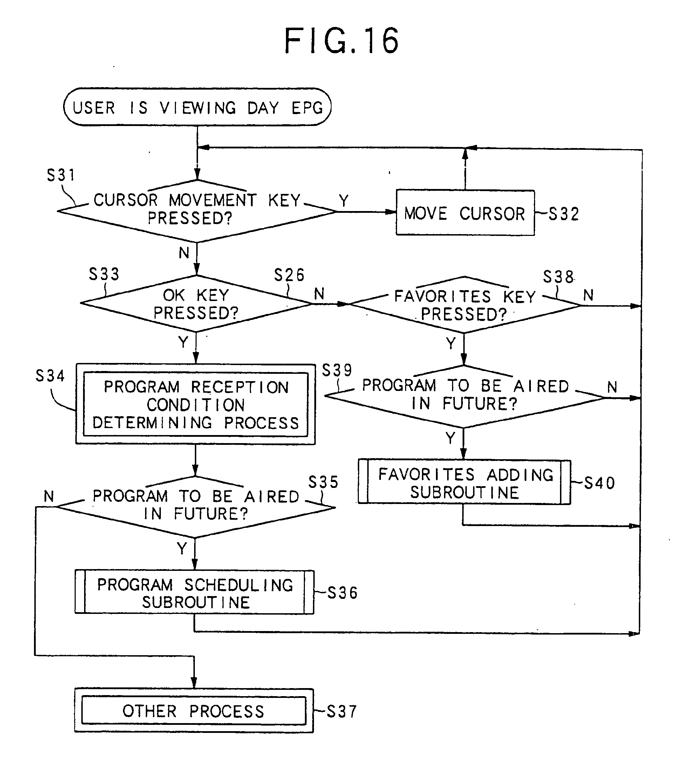

Further, as mentioned above, the user can schedule programs and/or add favorite programs to the relevant tables over the Day EPG 30. To do so, the CPU 17 executes the following subroutines, which will be described with reference to FIG. 16. FIG. 16 is a flowchart introducing a program scheduling subroutine and a Favorites adding subroutine to be executed with the day EPG 30 displayed. When the user presses necessary Cursor Movement keys over the Day EPG 30, the CPU 17 detects this (step S31) to move the cursor 33 in the directions instructed by the pressed keys (step S32).

If the user wishes to schedule a program for recording, he/she moves the cursor 33 to that program, and presses the OK key 80. Then, the CPU 17 detects this (step S33) to determine the program reception conditions for that program (step S34). For example, whether the program is a pay-per-view program is determined. If not, the CPU 17 proceeds to step S35. Otherwise, the CPU 17 moves to a payment step. Since the step 34 of determining the program reception conditions is not directly relevant to the present invention, its detailed description is omitted.

Next, in step S35, whether the program selected by the cursor 33 is to be aired in the future. If so, the CPU 17 moves to the program scheduling subroutine (step S36). Otherwise, for example, if the program is currently aired, the CPU 17 allows the user to view and/or record the program immediately (step S37).

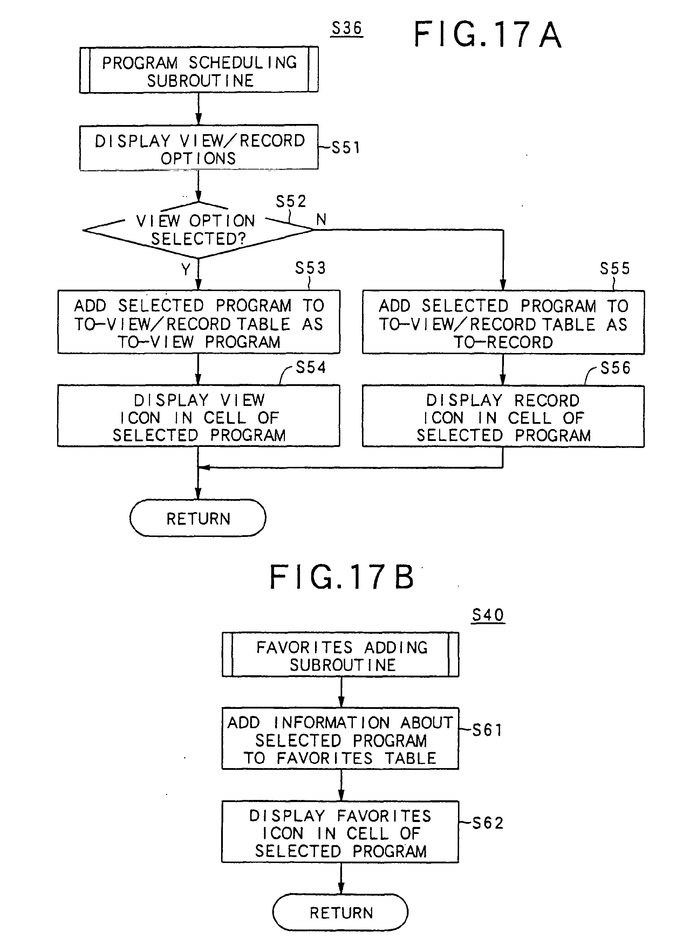

FIG. 17A shows the program scheduling subroutine executed in step S36 of FIG. 16. First, this subroutine displays options over the Day EPG 30 screen to ask the user if he/she wishes to schedule a program for viewing or recording (step S51). When the user selects one of the options with the Cursor Movement keys and presses the OK key 80, the CPU 17 detects this to determine whether the viewing option is selected (step S52). When determining that the viewing option is selected, the CPU 17 stores the program selected by the cursor 33 in the To-View/Record table 25 as a to-view program (step S53), and displays the View icon 37 in the cell of that program (step S54).

On the other hand, when determining that the recording option is selected, the CPU 17 stores the program in the To-View/Record table 25 as a to-record program (step S55), and displays the Record icon 38 in the cell of that program (step S56). Upon completion of the program scheduling subroutine shown in FIG. 17A, the CPU 17 returns to the process of FIG. 16 which is executed with the Day EPG displayed.

Next, when the user, wishing to add a favorite program, places the cursor 33 over the cell of that program and presses the Favorites key 95, the CPU 17 detects this (step S38), and determines whether that program is to be aired in the future (step S39). If so, the CPU 17 moves to the Favorites adding subroutine (step S40). Otherwise, the CPU 17 returns to step S31.

FIG. 17B shows the Favorites adding subroutine executed in step S40 of FIG. 16. In this subroutine, the CPU 17 adds a program selected by the cursor 33 to the Favorites table 26 (step S61), and displays the Favorites icon 39 in the cell of that program (step S62). Upon completion of the Favorites adding subroutine, the CPU 17 returns to the process of FIG. 16 which is executed with the Day EPG displayed. This way, the user can schedule programs and/or add favorite programs over the Day EPG 30 screen. Particularly, the Favorites adding subroutine provides the user with more ease than the program scheduling subroutine in that the former allows the user to add as many favorites belonging to the same time slot as he/she likes. Hence, the user can customize the program guide by adding his/her favorite programs only.

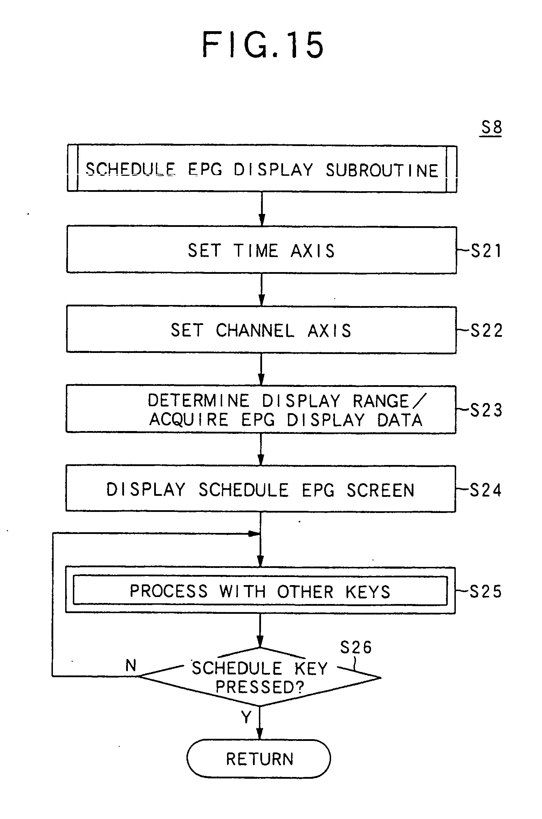

FIG. 15 shows the Schedule EPG displaying subroutine executed in step S8 of FIG. 13. Likewise the Day EPG displaying subroutine, first, the Schedule EPG displaying subroutine sets the day for display to the current day whereby "Today" is selected on the Day tab 34. Then, the CPU 17 sets the time axis of a Schedule EPG for display (step S21). Next, the CPU 17 sets the entry type axis of the Schedule EPG for display (step S22). For example, the CPU 17, by referencing the Favorites table 26, sets the number of Favorites rows in the entry type area 41. Then, the CPU 17 selects the size of the program grid 32, and acquires EPG display data fit for the selected display range from the SI, To-View/Record table 25, and Favorites table 26 (step S23).

Using the thus obtained EPG display data, the CPU 17 and the display processor 9 configure the program guide for display on the display 22 (step S24). This is how the Schedule EPG 40 such as shown in FIG. 6 is displayed. Since the Schedule EPG automatically displays scheduled and favorite programs at locations corresponding to their time slots on the same screen, the user can be informed of the contention of some programs in their relevant time slots easily.

When the user presses the Schedule key 93 again with the Schedule EPG 40 displayed, the CPU 17 detects this (step S26) to return to the main routine of FIG. 13, allowing the user to view the program. On the other hand, in step S25 of FIG. 15, the CPU 17 executes processes corresponding to various key operations performed over the remote control 12. For example, when the Information key 96 is pressed with the Schedule EPG 40 displayed, the CPU 17 displays the Detailed Information screen of the program selected by the cursor 33.

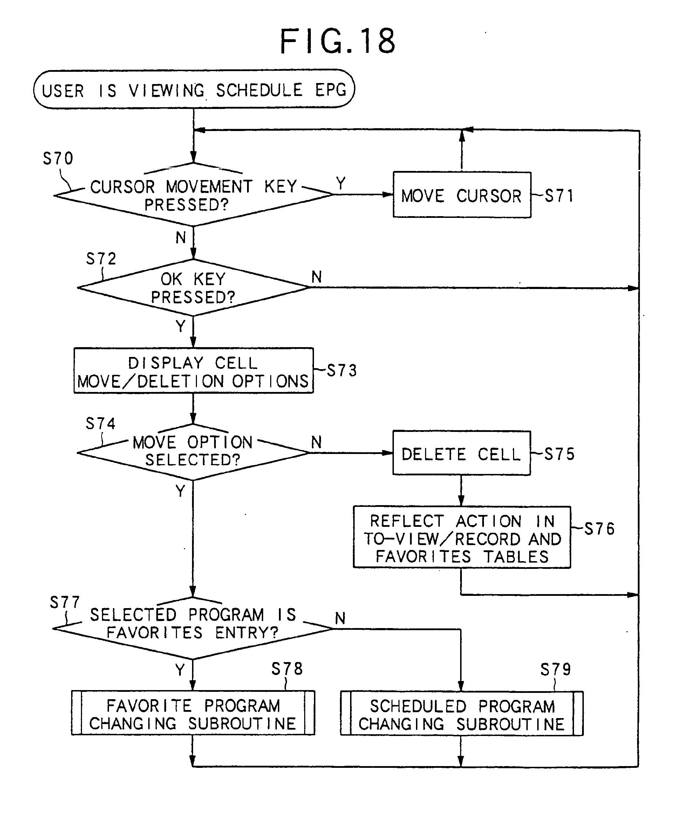

Further, the user can change the entry type from To-View/Record to Favorites and vice versa over the Schedule EPG 40 screen by moving the relevant program cells, as described with reference to FIG. 8A through 9C. Steps to be followed by the CPU 17 for moving program cells will be described with reference to FIG. 18. FIG. 18 is a flowchart showing a program cell moving process to be performed with the Schedule EPG 40 displayed. When the user operates the Cursor Movement keys while browsing through the Schedule EPG 40 screen, the CPU 17 detects this (step S70) to move the cursor 33 in the directions corresponding to the operated keys (step S71).

When the user, wishing to change the entry type of a program, moves the cursor 33 to the cell of that program and presses the OK key 80, the CPU 17 detects this (step S72) to display options over the Schedule EPG screen to ask the user if he/she moves or deletes the cell in question (step S73). When the user decides to move or delete the cell and presses the OK key 80, the CPU 17 detects this to determine whether the cell moving option is selected (step S74). If not, the CPU 17, determining that the cell deletion option is selected, deletes the cell of the program selected by the cursor 33 from the screen (step S75), and reflects the action in the To-View/Record table 25 and the Favorites table 26 (step S76). That is, if the program selected by the cursor 33 is listed in the To-View/Record row on the Schedule EPG screen, its information is deleted from the To-View/Record table 25. If, on the other hand, the same program is listed in the Favorites row, its information is deleted from the Favorites table 26.

In step S74, when the CPU 17 determines that the cell moving option is selected, the CPU 17 determines whether the program selected by the cursor 33 is a favorite program (step S77). If so, the CPU 17 proceeds to a favorite program changing subroutine (step S78). Otherwise, i.e., if the program is a to-view/record program, the CPU 17 proceeds to a scheduled program changing subroutine (step S79).

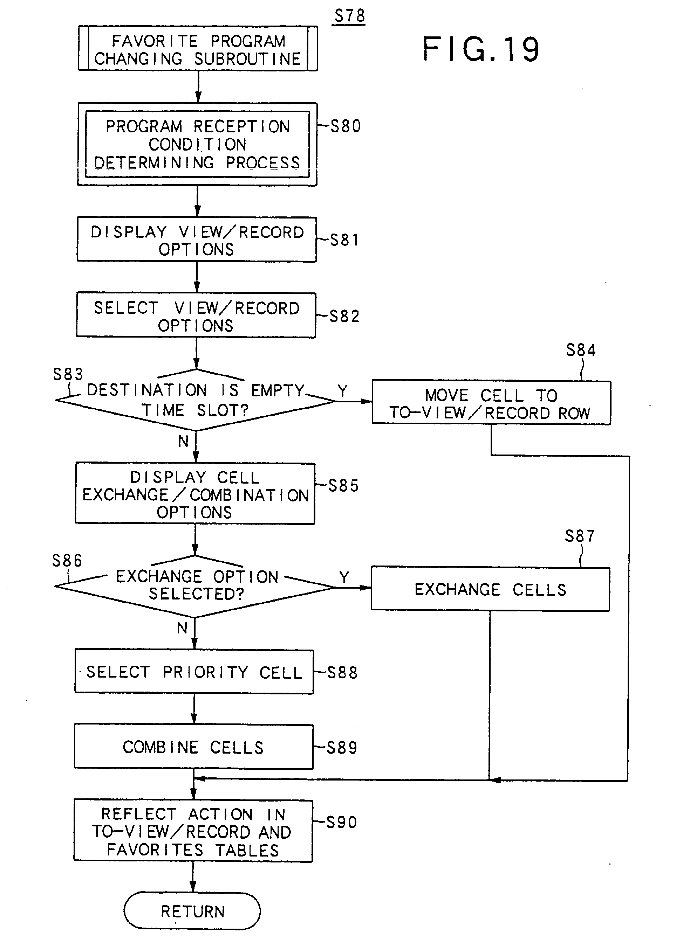

FIG. 19 shows the favorite program changing subroutine executed in step S78 of FIg. 18. This subroutine allows the user to change a favorite program to a scheduled program. First, the CPU 17 checks the reception conditions for the program selected by the cursor 33 (step S80). What is checked is the same as that in step S34 of FIG. 16.

Next, the CPU 17 displays options over the Schedule EPG 40 screen to ask the user to schedule the program as a to-view program or a to-record program (step S81). When the user selects one of the options with the Cursor Movement keys and presses the OK key 80, the CPU 17 stores this (step S82). Then, the CPU 17 determines whether the destination time slot for that program is empty (step S83). That is, it is determined whether any program contending with the selected program in the same time slot is listed in the To-View/Record row of the Schedule EPG 40. If it is determined that the destination time slot is empty, the CPU 17 moves the program cell in question to the To-View/Record row as shown in FIG. 8A (step S84). The CPU 17 then deletes the information about the moved program from the Favorites table 26, and at the same time, newly stores the same information in the To-View/Record table 25 under the entry type selected in step S82.

On the other hand, if it is determined in step S83 that the destination time slot is not empty, the CPU 17 displays options over the Schedule EPG 40 screen, asking the user to exchange or combine the cells (step S85). When the user selects one of the options with the Cursor Movement keys and presses the OK key 80, the CPU 17 detects this to determine whether the cell exchanging option is selected (step S86). If so, the CPU 17 exchanges the cell in the Favorites row with the cell in the To-View/Record row as shown in FIG. 8B (step S87). The CPU 17 then deletes the information about the program in the cell moved to the To-View/Record row, from the Favorites table 26, and newly stores the same information in the To-View/Record table 25 under the entry type selected in step S82. The CPU 17 also deletes the information about the program moved to the Favorites row, from the To-View/Record table 25, and newly stores the same information in the Favorites table 26 (step S90). It should be noted that the cell to be moved to the Favorites row may be deleted in steps S87 and S90.

On the other hand, if it is determined in step S86 that the cell combining option is selected, the CPU 17 prompts the user to select a priority program cell (step S88), and combines the cells in the To-View/Record row (step S89) accordingly. For example, to give priority to a program cell (cell to be moved) in the Favorites row, the cell to be moved is listed in the contending time slot in precedence over any program previously resident in the destination row, as shown in FIG. 9A and 9B. On the other hand, to give priority to the resident program cell in the To-View/Record row, the resident program cell remains listed in the contending time slot in precedence over the moved program cell, as shown in FIG. 9C.

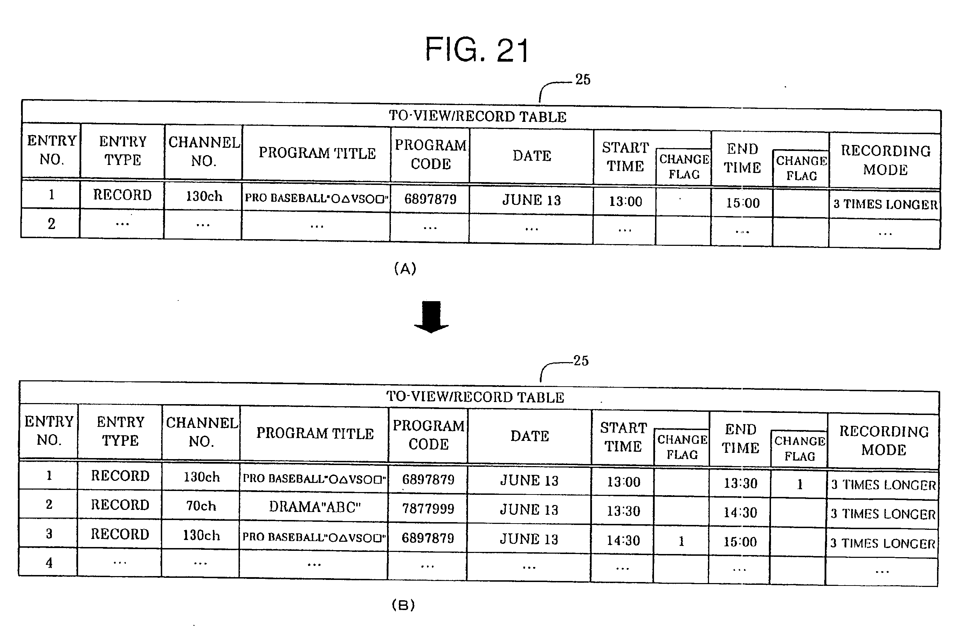

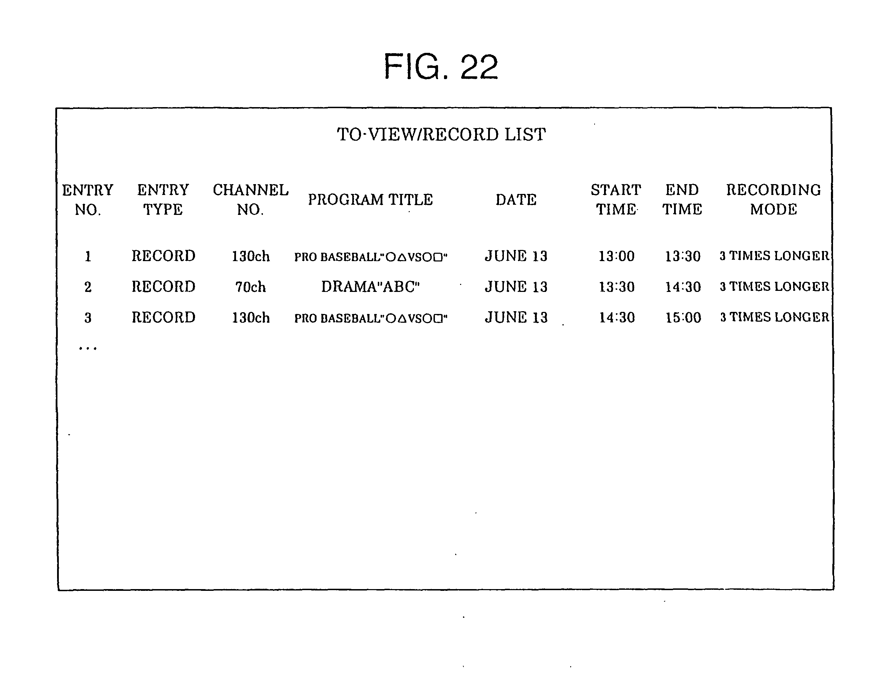

Similarly, in the examples of FIG. 9A and 9B, the CPU 17 deletes the information about the program in the cell moved to the To-View/Record row, from the Favorites table 26, and newly stores the same information in the To-View/Record table 25 under the entry type selected in step S82 (step S90). Specifically, in the example of FIG. 9A, the To-View/Record table 25 is changed from FIG. 21A to FIG. 21B in terms of contents. As shown in FIG. 21B, a change is made such that two entry numbers "1" and "3" are assigned to the pro baseball "○ΔVS ○□ ", interposing an entry number "2" for the drama "ABC" therebetween. Changes are also made to the change flag indicative of the end time of the entry number "1" pro baseball "○ΔVS○□" by setting the flag to "1", and to the change flag indicative of the start time of the entry number "3" pro baseball "○ΔVS○□" by setting the flag to "1". As shown in FIg. 22, these changes made in the To-View/Record table 25 are reflected in the To-View/Record list displayed when the List key 94 is pressed. On the other hand, in the example of FIG. 9C, the CPU 17 deletes the information about the program in the cell moved to the To-View/Record row, from the Favorites table 26, and newly stores the same information in the To-View/Record table 25 under the entry type selected in step S82 (step S90). In this case, the start time of the program moved to the To-View/Record row which is stored in the To-View/Record table 25 becomes later than its start time stored before the program is moved, while the start and end times of the program previously resident in the To-View/Record row which are stored in the To-View/Record table 25 remain unchanged.

In the To-View/Record row to which the cell has been moved in each of FIG. 9A to 9C, it should be noted that the information about a scheduled program, which belongs to a certain time slot and which is cancelled due to cell being moved or combined, is stored in the RAM 16 to allow that scheduled program to revive in the same time slot later. That is, as shown in FIG. 9A, for example, the scheduled information about the pro baseball "○ΔVS○□", which belongs to a time slot 1:30-2:30 p.m. and which is cancelled due to combination with the cell of the drama "ABC" moved from the Favorites row, is stored in the RAM 16. This arrangement allows the user to revive this cancelled information about the pro baseball "○ΔVS○ □ " in the time slot 1:30-2:30 p.m. when the cell combination is undone to move the cell of the drama "ABC" back to the Favorites row. In one embodiment, any program whose schedule is cancelled or whose time is changed as in this case may be backed up in the Favorites table 26.

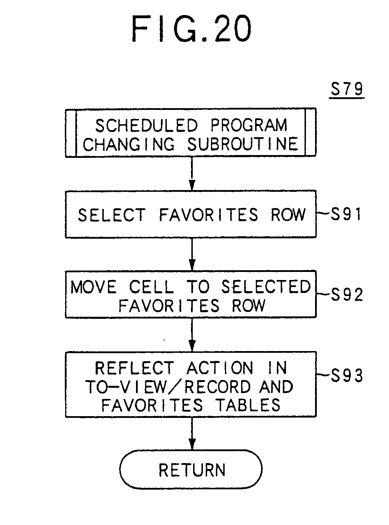

FIG. 20 shows the scheduled program changing subroutine executed in step S80 of FIG. 18. This subroutine changes the entry type of a program from To-View/Record to Favorites. First, the CPU 17 selects a destination Favorites row (step S91). Any row in which multiple programs contend in the same time slot is avoided.

Next, the CPU 17 moves the cell of a program selected by the cursor 33 to the selected destination row (step S92). At the same time, the CPU 17 deletes the information about the program moved to the Favorites row, from the To-View/Record table 25, and stores the same information in the Favorites table 26 as a new entry (step S93).

If the Day EPG screen is displayed after the program information is newly stored in the To-View/Record table 25 or the Favorites table 26 during the execution of the subroutines shown in FIG. 19 and 20, the View iron 37, the Record icon 38, or the Favorites icon 39 is displayed in the cell of the program in question. It should be noted that the user can make a recording of only a part of the program, not the whole program, of the pro baseball "○ΔVS○□" in the examples of FIG. 9A and 9B, and of the drama "ABC" in the example of FIG. 9C. In this case, their Record icons 38 may not be displayed over the Day EPG 30.

As described above, the Schedule EPG according to the disclosed embodiments provides the user with a customized program guide screen listing only information about favorite programs which the user wishes to view/record and which the user has scheduled for viewing/recording. Additionally, such a customized program guide screen conveniently lists information about programs at locations corresponding to their time slots along the time axis, thereby allowing the user to check the program information and their air times easily. Further, when multiple favorite and/or scheduled programs contend in the same time slot, the user can also check this situation quickly.

Still further, the user can exchange a favorite program with a scheduled program over the Schedule EPG screen, whereby the time and labor required for the user to schedule programs can be remarkably curtailed.

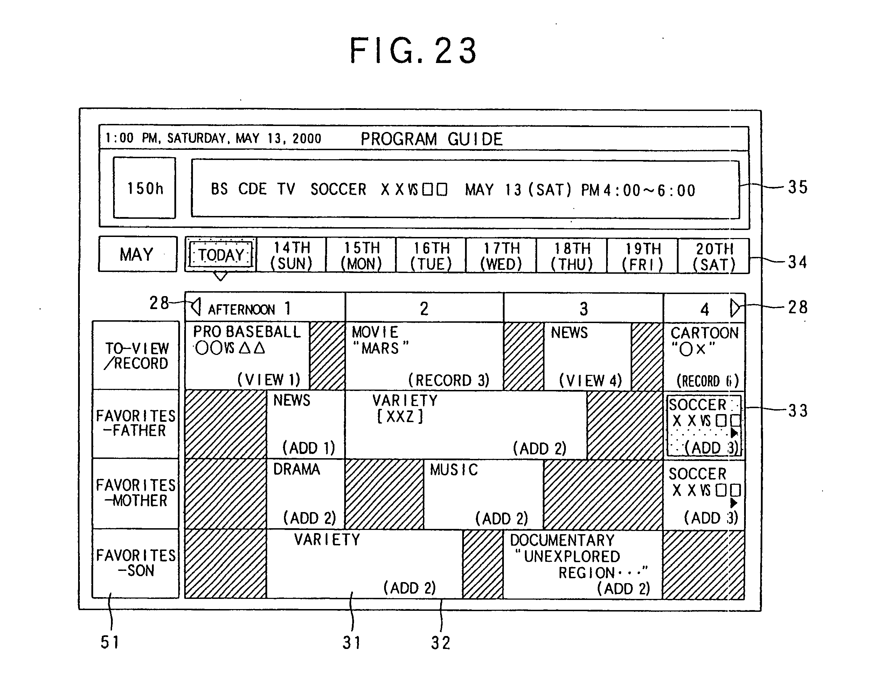

In the above embodiments, the Favorites rows in the Entry Type area 41 of the Schedule EPG are dedicated to only one user. In some embodiments, a Schedule EPG 50 may be configured such that the Entry Type area 41 can be efficiently utilized by a plurality of users. In an example of FIG. 23, three Favorites rows are provided respectively for the father, the mother, and a son, and program cells are moved in the same way as in the above embodiments. This configuration provides each user with his/her own program guide screen.

In FIG. 7, the Schedule EPG 45 has two rows which are respectively dedicated to to-view programs and to-record programs. In one embodiment, it may be so arranged that rows are provided by type of recording unit, i.e., by the VTR 24a, a DVD-RW 24b, and a HDD 24c, respectively, and that these rows are labeled as "VTR", "DVD-RW", and "HDD" in the Entry Type area 41. In another embodiment, a number of recording media may be added to the receiver 1 to increase the number of rows so as to correspond to the number of recording media.

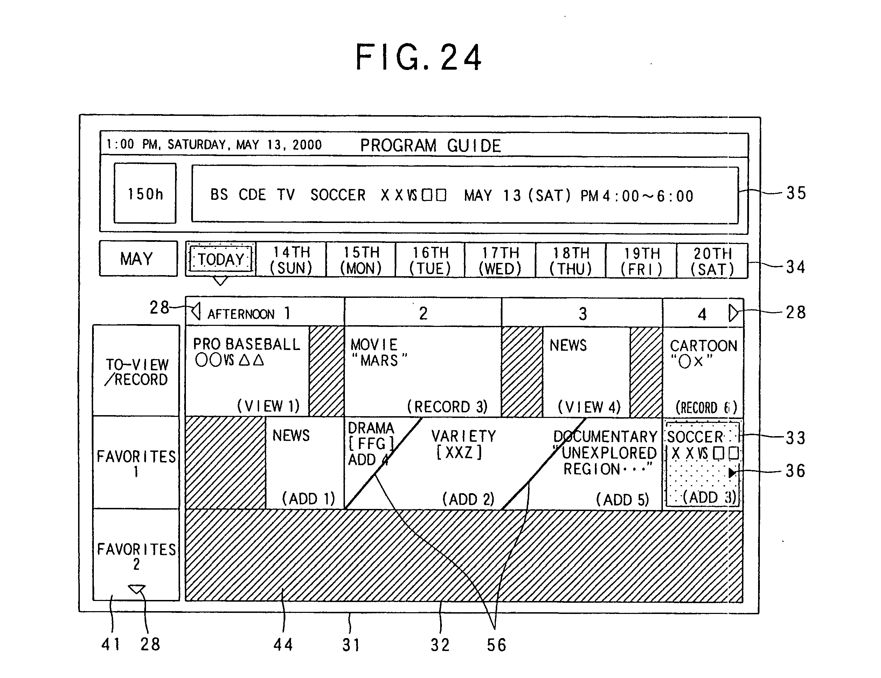

In still another embodiment, those favorite programs contending in the same time slot such as shown in FIG. 6 may be displayed in a single row, instead of being displayed in two or more rows. For example, a Schedule EPG shown in FIG. 24 lists favorite programs contending in the same time slot in a single Favorites row, cuing the user with slants 56 indicative of contention. The same can apply to the To-View/Record row.

While the above embodiments are applied to satellite broadcast programs, the present invention is not limited to them, but can be applied to systems for airing programs with dedicated cables, and systems for airing programs via public networks, such as the Internet. Further, while the EPG is displayed on the TV display in the above embodiments, the present invention is not limited to them. The EPG may be displayed on a personal computer monitor, etc.

As described in the foregoing, the present invention provides user-specific EPG screens, and implements easy, visual scheduling and rescheduling of programs for viewing/recording in a visually recognizable manner.

## Claims

1. A program guiding apparatus comprising:
a program adding device(17) for adding desired programs to tables (25,26);
a program scheduling device (17) for scheduling programs to be received based on said tables; and
a display device(22) for displaying information about said added programs and information about said scheduled programs while arranged in a single two-dimensional program guide screen(40) at locations corresponding to respective time slots along a time axis,
**characterized in that**
said display device configured to display break marks at the end of the interrupted program contending with another one with higher priority and/or at the beginning of the re-starting program after having been either interrupted or overlapped by a higher priority contending program, when multiple scheduled programs contend in the same time slot.

2. The program guiding apparatus according to claim 1,
wherein,
said display device configured to display favorite programs contending in the same time slot in a single row, instead of being displayed in two or more rows, and to display slants for cuing a user with said slants indicative of said favorite programs contention.

3. The program guiding apparatus according to claim 1 or 2,
wherein the display device(22) displays outline information of selected programs in the same program guide screen.

4. The program guiding apparatus according to claim 1 or 2,
wherein said program scheduling device(17) schedules programs selected from said programs added by said program adding device(17).

5. The program guiding apparatus according to claim 1 or 2, wherein said two-dimensional program guide screen(40) includes a first area for displaying said information about said added programs and a second area for displaying said information about said scheduled programs, said first and second areas being displayed while distinguished from each other.

6. The program guiding apparatus according to claim 1 or 2 wherein each of said program adding device (17) and said program scheduling device(17) allows a plurality of programs to be added, said plurality of programs contending in whole or part of a time slot; and
even if a plurality of said added programs or said scheduled programs contend in whole or part of said time slot, said display device(22) displays information about each of said contending programs in said two-dimensional program guide screen(40) .

7. The program guiding apparatus according to claim 1 or 2, wherein said two-dimensional program guide screen(40) includes areas corresponding to entry types defining the type of selection ("to view" / "to record"/ "favorite") of the added programs , and displays said information about said added programs in a corresponding one of said areas.

8. The program guiding apparatus according to claim 7, wherein each of said entry types is dedicated to a different user.

9. The program guiding apparatus according to claim 1 or 2, wherein said information about said programs displayed while arranged in said two-dimensional program guide screen(40) is moved in a user observable manner to change said added programs to said scheduled programs and said scheduled programs to said added programs.

10. The program guiding apparatus according to claim 1 or 2, wherein if said information about said added programs contends with said information about said scheduled programs in whole or part of a time slot, said information about said added programs and said information about said scheduled programs, which are displayed while arranged in said two-dimensional program guide screen(40), are exchanged in a user observable manner to change said added programs to said scheduled programs and said scheduled programs to said added programs.

11. The program guiding apparatus according to claim 1 or 2, wherein if said information about said added programs contends with said information about said scheduled programs in whole or part of a time slot, said information about said added programs is combined with said information about said scheduled programs, both of which are displayed while arranged in said two-dimensional program guide screen (40), in a user observable manner to change said added programs to said scheduled programs.

12. The program guiding apparatus according to claim 1 or 2, wherein said programs are added via a two-dimensional program guide including a time axis and a channel axis for displaying a plurality items of program information.

13. A program guiding method comprising the processes of:
adding device (17) for adding desired programs to tables (25,26);
scheduling programs to be received based on said tables; and
displaying information about said added programs and information about said scheduled programs while arranged in a single two-dimensional program guide screen(40) at locations corresponding to respective time slots along a time axis,
further **characterized by**
displaying break marks at the end of the interrupted program contending with another one with higher priority and/or at the beginning of the re-starting program after having been either interrupted or overlapped by a higher priority contending program, when multiple scheduled programs contend in the same time slot.

## Patentansprüche

1. Vorrichtung zur Programmführung, umfassend:
eine Programmhinzufügungsvorrichtung (17) zum Hinzufügen gewünschter Programme zu Tabellen (25, 26);
eine Programmterminierungsvorrichtung (17) zum Terminieren von Programmen, die empfangen werden sollen, basierend auf den Tabellen; und
eine Anzeigevorrichtung (22) zum Anzeigen von Informationen über die hinzugefügten Programme und Informationen über die terminierten Programme, während sie in einem einzigen zweidimensionalen Programmführungsschirm (40) an Stellen angeordnet sind, die jeweiligen Zeitschlitzen entlang einer Zeitachse entsprechen,
**dadurch gekennzeichnet, dass**
die Anzeigevorrichtung konfiguriert ist, Unterbrechungsmarkierungen am Ende des unterbrochenen Programms, das mit einem anderen mit höherer Priorität konkurriert, und/oder am Anfang des erneut startenden Programms anzuzeigen, nachdem dieses entweder unterbrochen oder von einem konkurrierenden Programm mit höherer Priorität überlappt wurde, wenn mehrere terminierte Programme in dem gleichen Zeitschlitz konkurrieren.

2. Vorrichtung zur Programmführung nach Anspruch 1,
wobei die Anzeigevorrichtung konfiguriert ist, um Favoritenprogramme, die in dem gleichen Zeitschlitz konkurrieren, in einer einzigen Zeile anzuzeigen, anstatt sie in zwei oder mehr Zeilen anzuzeigen, und um Schrägstriche anzuzeigen, die einen Benutzer mit diesen Schrägstrichen auf die Konkurrenz der Favoritenprogramme hinzuweisen.

3. Vorrichtung zur Programmführung nach Anspruch 1 oder 2,
wobei die Anzeigevorrichtung (22) Kurzfassungsinformationen über ausgewählte Programme in dem gleichen Programmführungsschirm anzeigt.

4. Vorrichtung zur Programmführung nach Anspruch 1 oder 2,
wobei die Terminierungsvorrichtung (17) Programme terminiert, die aus den Programmen ausgewählt werden, die von der Programmhinzufügungsvorrichtung (17) hinzugefügt werden.

5. Vorrichtung zur Programmführung nach Anspruch 1 oder 2, wobei der zweidimensionale Programmführungsschirm (40) einen ersten Bereich zum Anzeigen der Informationen über die hinzugefügten Programme und einen zweiten Bereich zum Anzeigen der Informationen über die terminierten Programme umfasst, wobei die ersten und zweiten Bereiche angezeigt werden, während sie voneinander abgegrenzt sind.

6. Vorrichtung zur Programmführung nach Anspruch 1 oder 2, wobei die Programmhinzufügungsvorrichtung (17) und die Programmterminierungsvorrichtung (17) jeweils ermöglichen, dass eine Vielzahl von Programmen hinzugefügt wird, wobei die Vielzahl von Programmen im gesamten oder einem Teil eines Zeitschlitzes konkurriert; und
die Anzeigevorrichtung (22), selbst wenn eine Vielzahl der hinzugefügten Programme oder der terminierten Programme im gesamten oder einem Teil des Zeitschlitzes konkurrieren, Informationen über jedes der konkurrierenden Programme in dem zweidimensionalen Programmführungsschirm (40) anzeigt.

7. Vorrichtung zur Programmführung nach Anspruch 1 oder 2, wobei der zweidimensionale Programmführungsschirm (40) Bereiche umfasst, die Eintragstypen entsprechen, welche die Art der Auswahl ("Anschauen"/"Aufnehmen"/"Favoriten") der hinzugefügten Programme anzeigen, und die Informationen über die hinzugefügten Programme in einem entsprechenden dieser Bereiche anzeigt.

8. Vorrichtung zur Programmführung nach Anspruch 7, wobei jeder der Eintragstypen einem anderen Benutzer zugeordnet ist.

9. Vorrichtung zur Programmführung nach Anspruch 1 oder 2, wobei die Informationen über die Programme, die angezeigt werden, während sie in dem zweidimensionalen Programmführungsschirm (40) angeordnet sind, in einer durch einen Benutzer beobachtbaren Weise bewegt werden, um die hinzugefügten Programme in die terminierten Programme und die terminierten Programme in die hinzugefügten Programme zu ändern.

10. Vorrichtung zur Programmführung nach Anspruch 1 oder 2, wobei, wenn die Informationen über die hinzugefügten Programme in einem ganzen oder einem Teil eines Zeitschlitzes mit Informationen über die terminierten Programme konkurrieren, die Informationen über die hinzugefügten Programme und die Informationen über die terminierten Programme, die angezeigt werden, während sie in dem zweidimensionalen Programmführungsschirm (40) angeordnet sind, in einer durch den Benutzer beobachtbaren Weise ausgetauscht werden, um die hinzugefügten Programme in die terminierten Programme und die terminierten Programme in die hinzugefügten Programme zu ändern.

11. Vorrichtung zur Programmführung nach Anspruch 1 oder 2, wobei, wenn die Informationen über die hinzugefügten Programme in einem ganzen oder einem Teil eines Zeitschlitzes mit Informationen über die terminierten Programme konkurrieren, die Informationen über die hinzugefügten Programme mit den Informationen über die terminierten Programme kombiniert werden, die beide angezeigt werden, während sie in dem zweidimensionalen Programmführungsschirm (40) in einer durch den Benutzer beobachtbaren Weise angezeigt werden, um die hinzugefügten Programme in die terminierten Programme zu ändern.

12. Vorrichtung zur Programmführung nach Anspruch 1 oder 2, wobei die Programme über eine zweidimensionale Programmführung hinzugefügt werden, die eine Zeitachse und eine Kanalachse zum Anzeigen einer Vielzahl von Elementen mit Programminformationen umfasst.

13. Verfahren zur Programmführung, das die folgenden Verfahren umfasst:
Hinzufügungsvorrichtung (17) zum Hinzufügen gewünschter Programme zu Tabellen (25, 26);
Terminieren von Programmen, die empfangen werden sollen, basierend auf den Tabellen; und
Anzeigen von Informationen über die hinzugefügten Programme und Informationen über die terminierten Programme, während sie in einem einzigen zweidimensionalen Programmführungsschirm (40) an Stellen angeordnet sind, die jeweiligen Zeitschlitzen entlang einer Zeitachse entsprechen,
ferner **gekennzeichnet durch**
das Anzeigen von Unterbrechungsmarkierungen am Ende des unterbrochenen Programms, das mit einem anderen mit höherer Priorität konkurriert, und/oder am Anfang des erneut startenden Programms, nachdem dieses entweder unterbrochen oder von einem konkurrierenden Programm mit höherer Priorität überlappt wurde, wenn mehrere terminierte Programme in dem gleichen Zeitschlitz konkurrieren.

## Revendications

1. Appareil de guide de programme comprenant :
un dispositif d'ajout de programme (17) pour ajouter des programmes souhaités à des tableaux (25, 26) ;
un dispositif de planification de programme (17) pour planifier des programmes à recevoir sur la base desdits tableaux ; et
un dispositif d'affichage (22) pour afficher des informations sur lesdits programmes ajoutés et des informations sur lesdits programmes planifiés tout en étant agencées dans un écran de guide de programme bidimensionnel unique (40) à des emplacements correspondant à des tranches de temps respectives sur un axe de temps ;
**caractérisé en ce que**
ledit dispositif d'affichage est configuré pour afficher des marques de rupture à la fin du programme interrompu en conflit avec un autre ayant une priorité plus élevée et/ou au début du programme de redémarrage après avoir été soit interrompu soit chevauché par un programme en conflit de priorité plus élevé, lorsque de multiples programmes planifiés sont en conflit dans la même tranche de temps.

2. Appareil de guide de programme selon la revendication 1, dans lequel ledit dispositif d'affichage est configuré pour afficher des programmes favoris en conflit dans la même tranche de temps sur une rangée unique, au lieu d'être affichés sur deux rangées ou plus et pour afficher des inclinaisons de signalisation d'un utilisateur, lesdites inclinaisons étant indicatives dudit conflit des programmes favoris.

3. Appareil de guide de programme selon la revendication 1 ou 2, dans lequel le dispositif d'affichage (22) affiche des informations de contour de programmes sélectionnés dans le même écran de guide de programme.

4. Appareil de guide de programme selon la revendication 1 ou 2, dans lequel ledit dispositif de planification de programme (17) planifie des programmes choisis parmi lesdits programmes ajoutés par ledit dispositif d'ajout de programme (17).

5. Appareil de guide de programme selon la revendication 1 ou 2, dans lequel ledit écran de guide de programme bidimensionnel (40) comprend une première zone pour afficher lesdites informations sur lesdits programmes ajoutés et une seconde zone pour afficher lesdites informations sur lesdits programmes planifiés, lesdites première et seconde zones étant affichées tout en étant distinguées l'une de l'autre.

6. Appareil de guide de programme selon la revendication 1 ou 2, dans lequel chacun dudit dispositif d'ajout de programme (17) et dudit dispositif de planification de programme (17) permet d'ajouter une pluralité de programmes, ladite pluralité de programmes étant en conflit dans la totalité ou une partie d'une tranche de temps ; et même si une pluralité desdits programmes ajoutés ou desdits programmes planifiés est en conflit dans la totalité ou une partie de ladite tranche de temps, ledit dispositif d'affichage (22) affiche des informations sur chacun desdits programmes en conflit dans ledit écran de guide de programme bidimensionnel (40).

7. Appareil de guide de programme selon la revendication 1 ou 2, dans lequel ledit écran de guide de programme bidimensionnel (40) comprend des zones correspondant à des types d'entrée définissant le type de sélection (« pour visualiser »/« pour enregistrer »/« favoris ») des programmes ajoutés et affiche lesdites informations sur lesdits programmes ajoutés dans une zone correspondante parmi lesdites zones.

8. Appareil de guide de programme selon la revendication 7, dans lequel chacun desdits types d'entrée est dédié à un utilisateur différent.

9. Appareil de guide de programme selon la revendication 1 ou 2, dans lequel lesdites informations sur lesdits programmes affichés tout en étant agencées dans ledit écran de guide de programme bidimensionnel (40) sont déplacées de manière à pouvoir être observées par un utilisateur pour changer lesdits programmes ajoutés en lesdits programmes planifiés et lesdits programmes planifiés en lesdits programmes ajoutés.

10. Appareil de guide de programme selon la revendication 1 ou 2, dans lequel si lesdites informations sur lesdits programmes ajoutés sont en conflit avec lesdites informations sur lesdits programmes planifiés dans la totalité ou une partie d'une tranche de temps, lesdites informations sur lesdits programmes ajoutés et lesdites informations sur lesdits programmes planifiés, qui sont affichées tout en étant agencées dans ledit écran de guide de programme bidimensionnel (40), sont échangées de manière à pouvoir être observées par un utilisateur pour changer lesdits programmes ajoutés en lesdits programmes planifiés et lesdits programmes planifiés en lesdits programmes ajoutés.

11. Appareil de guide de programme selon la revendication 1 ou 2, dans lequel si lesdites informations sur lesdits programmes ajoutés sont en conflit avec lesdites informations sur lesdits programmes planifiés dans la totalité ou une partie d'une tranche de temps, lesdites informations sur lesdits programmes ajoutés sont combinées auxdites informations sur lesdits programmes planifiés, qui sont toutes affichées tout en étant agencées dans ledit écran de guide de programme bidimensionnel (40), de manière à pouvoir être observées par un utilisateur pour changer lesdits programmes ajoutés en lesdits programmes planifiés.

12. Appareil de guide de programme selon la revendication 1 ou 2, dans lequel lesdits programmes sont ajoutés par le biais d'un guide de programme bidimensionnel comprenant un axe de temps et un axe de canal pour afficher une pluralité d'éléments d'information de programme.

13. Procédé de guide de programme comprenant les processus consistant à :
ajouter, au moyen d'un dispositif d'ajout (17), des programmes souhaités à des tableaux (25, 26) ;
planifier des programmes à recevoir sur la base desdits tableaux ; et
afficher des informations sur lesdits programmes ajoutés et des informations sur lesdits programmes planifiés tout en étant agencées dans un écran de guide de programme bidimensionnel unique (40) à des emplacements correspondant à des tranches de temps respectives sur un axe de temps,
**caractérisé en outre par**
l'affichage de marques de rupture à la fin du programme interrompu en conflit avec un autre ayant une priorité plus élevée et/ou au début du programme de redémarrage après avoir été soit interrompu soit chevauché par un programme en conflit de priorité plus élevée lorsque de multiples programmes planifiés sont en conflit dans la même tranche de temps.
